# EUROPÄISCHE PATENTSCHRIFT

(11) **EP 2 182 698 B1**
(45) Veröffentlichungstag und Bekanntmachung des Hinweises auf die Patenterteilung: **03.04.2013**
(21) Anmeldenummer: 08105682.2
(22) Anmeldetag: 28.10.2008
(51) Int. Cl.: H04W 4/02, H04L 29/08, H04L 29/12

(54) **Verfahren, Severeinrichtung und Datenauslieferungseinrichtung zur Datenübertragung**
Procedure, server device and data delivery device to transfer data
Procédé, dispositif de serveur et dispositif de livraison de données destinés à la transmission de données

(43) Veröffentlichungstag der Anmeldung: 05.05.2010
(73) Patentinhaber: Nitz Facility GmbH, 39042 Brixen (IT)
(72) Erfinder: Nitz, Rüdiger, 39040, Feldthurns (IT)
(74) Vertreter: Schneider, Günther Martin

(56) Entgegenhaltungen:
- WO-A-02/09461
- US-A1- 2003 125 909

## Beschreibung

Die Erfindung betrifft ein Verfahren zur Bereitstellung von Daten an mindestens einer Datenauslieferungseinrichtung für die Übertragung an mindestens ein Endgerät, wobei Daten von einer Sendeeinrichtung an die mindestens eine Datenauslieferungseinrichtung übertragen werden. Des Weiteren betrifft die Erfindung eine hierzu korrespondierende Servereinrichtung und eine Datenauslieferungseinrichtung.

Derartige Verfahren zur Datenübertragung sind aus dem Stand der Technik bekannt und dienen dazu, Daten zur Übertragung auf eine mobile Empfangseinrichtung bereitzustellen, wobei die Übertragung weiter auf die mobile Empfangseinrichtung durch den Verwender der mobilen Empfangseinrichtung ausgelöst wird. Beispielsweise werden mobile Werbeplakatwände mit Datenauslieferungseinrichtungen versehen, wobei der Benutzer einer mobilen Empfangseinrichtung, sobald er sich in der Nähe der Werbeplakatwand befindet, eine Datenverbindung zu dieser Datenauslieferungseinrichtung herstellen kann und die in der Datenauslieferungseinrichtung gespeicherten Daten auf die mobile Empfangseinrichtung, etwa ein Mobiltelefon, übertragen lassen kann. Derartige mobile Werbeplakatwände mit Datenauslieferungseinrichtungen ändern häufig ihren Standort, etwa im Rahmen einer Werbekampagne.

Zu diesem Zweck werden die in Datenauslieferungseinrichtungen zu speichernden Daten in einer Sendeeinrichtung erzeugt und an die Datenauslieferungseinrichtung übertragen, wo sie zur Übertragung auf mobile Empfangseinrichtungen bereitgestellt werden. Für die Datenübertragung von der Sendeeinrichtung zur Datenauslieferungseinrichtung wird eine Verbindung zwischen Sendeeinrichtung und Datenauslieferungseinrichtung hergestellt. Ein Bearbeiter, welcher Daten von der Sendeeinrichtung zur Datenauslieferungseinrichtung übertragen will, muss über die notwendigen technischen Informationen, etwa die Netzwerkadresse verfügen, um eine Verbindung zur Datenauslieferungseinrichtung herstellen zu können.

Ein Nachteil besteht darin, dass bei sich ändernder Netzwerkadresse einer Datenauslieferungseinrichtung, etwa wenn die Datenauslieferungseinrichtung keine statische sondern eine dynamisch zugeordnete Netzwerkadresse hat, der Bearbeiter keine Verbindung mehr zu dieser Datenauslieferungseinrichtung herstellen kann oder die gerade gültige Netzwerkadresse dieser Datenauslieferungseinrichtung ausfindig machen muss.

Des Weiteren ist bekannt, derartige mobile Werbeplakatwände mit Datenauslieferungseinrichtungen auch dazu zu verwenden, ortsbezogene Inhalte, etwa Informationen über die nähere Umgebung des Standortes der mobilen Werbeplakatwand, für Empfangseinrichtungen bereitzustellen. Dazu werden standortspezifische Inhalte in den Datenauslieferungseinrichtungen bereitgestellt.

Damit ein Verfasser solcher standortspezifischer Inhalte diese an eine Datenauslieferungseinrichtung an einem bestimmten Ort übertragen kann, muss er wissen, ob bzw. welche Datenauslieferungseinrichtung sich an welchem Standort befindet, um eine Verbindung für eine Datenübertragung zur korrekten Datenauslieferungseinrichtung herstellen zu können. Dies kann allerdings nicht immer gewährleistet werden, insbesondere dann nicht, wenn die Standorte von Datenauslieferungseinrichtungen häufig geändert werden. Standortänderungen und Änderungen der Netzwerkadressen von Datenauslieferungseinrichtung müssten ständig an die Verfasser solcher standortspezifischer Inhalte kommuniziert werden, um eine Übertragung von standortspezifischen Inhalten zu ermöglichen.

Besonders problematisch ist es, wenn viele Verfasser standortspezifische Inhalte für viele Datenauslieferungseinrichtungen, welche häufig ihre Standorte ändern, erzeugen und auf unterschiedliche Datenauslieferungseinrichtungen übertragen wollen.

Die zuvor beschriebene Art der Bereitstellung standortspezifischer Inhalte eignet sich daher nur, wenn die Datenauslieferungseinrichtungen statisch hinsichtlich ihres Standortes und ihrer Netwerkadresse sind oder wenn nur sehr wenige Datenauslieferungseinrichtungen für die Bereitstellung verschiedener standortspezifischer Inhalte vorgesehen sind.

Aus der WO 02/09461 A1 ist ein lokationsbasierten Werbebroker bekannt, welcher mit einer Sendeeinrichtung gekoppelt ist. Der Werbebroker nimmt von der Sendeeinrichtung lokationsbezogene Werbedaten entgegen. Der Werbebroker ist über einen mobilen Internetserviceprovider und ein Mobilfunknetzwerk mit mobilen Endgeräten verbindbar, um an ausgewählte mobile Endgeräte lokationsbezogene Werbedaten zu übertragen, sofern die Lokationsdaten der lokationsbezogenen Werbedaten mit den Lokationsdaten der mobilen Endgeräte übereinstimmt. Um die Übereinstimung der Lokationsdaten zu ermitteln, stellt der Werbebroker eine Anfrage an den Internetserviceprovider, welcher die Lokation des mobilen Endgerätes ermittelt.

Die US 2003/0125909 A1 beschreibt ein Verfahren zur Lastverteilung von Clientanfragen auf mehrere Serversysteme in einem Netzwerksystem, wobei eine Clientanfrage an einen überlasteten Server an einen weiteren Server weitergeleitet wird und wobei der weitere Server anhand von Geocodes ausgewählt wird.

Aufgabe der vorliegenden Erfindung ist es daher, Lösungen bereitzustellen, durch welche es ermöglicht wird, Daten auf mindestens einer Datenauslieferungseinrichtung zur Übertragung an mindestens ein Endgerät (Empfangseinrichtung) bereitzustellen, welche die aus dem Stand der Technik bekannten Nachteile zumindest teilweise vermeiden.

Demnach wird ein Verfahren zum Bereitstellen von Daten für die Übertragung auf mindestens ein Endgerät bereitgestellt, wobei das mindestens eine Endgerät mit mindestens einer Datenauslieferungseinrichtung, welche eine Speichereinrichtung aufweist, verbindbar ist, wobei die mindestens eine Datenauslieferungseinrichtung mit einer Servereinrichtung verbindbar ist, wobei die Servereinrichtung mit mindestens einer Sendeeinrichtung verbindbar ist, wobei der mindestens einen Datenauslieferungseinrichtung ein Geocode zuordenbar ist, und wobei die Servereinrichtung zumindest folgende Schritte ausführt:
- Empfangen eines Datensatzes von der mindestens einen Sendeeinrichtung, wobei der Datensatz zumindest einen Datenblock mit Nutzdaten und einen Datenblock mit mindestens einem Geocode umfasst;
- Übertragen des Datensatzes an mindestens eine Datenauslieferungseinrichtung, deren Geocode in einer vorbestimmten Relation zu dem mindestens einen Geocode aus dem Datenblock des Datensatzes steht, zum permanenten Speichern des übertragenen Datensatzes in der Speichereinrichtung der Datenauslieferungseinrichtung und zum Bereithalten des Datensatzes in der Datenauslieferungseinrichtung zur Übertragung an mindestes ein Endgerät;
wobei bei der Servereinrichtung den Geocodes der Datenauslieferungseinrichtungen Adressen von Datenauslieferungseinrichtungen zuordenbar sind,
wobei vor der Übertragung des Datensatzes für Geocodes, welche in der vorbestimmten Relation zu dem mindestens einen Geocode aus dem Datenblock des Datensatzes stehen, mindestens eine zugeordnete Adresse ermittelt wird, und
wobei der Datensatz an die mindestens eine Datenauslieferungseinrichtung mit der mindestens einen ermittelten Adresse übertragen wird, und wobei der Datensatz in der Speichereinrichtung der Datenauslieferungseinrichtung permanent gespeichert wird.

Indem Daten unter Angabe lediglich eines Geocodes auf mindestens eine Datenauslieferungseinrichtung übertragen werden, wo sie zur Übertragung auf mindestens ein Endgerät bereitgestellt werden können, braucht der Ersteller der Daten die Netzwerkadresse nicht zu kennen, um den Datensatz zu übertragen. Er muss lediglich wissen, zu welchem Standort er die Daten übertragen möchte. Hierzu gibt er den Standort (im Datensatz) als Geocode an. Damit ist das Verfahren unabhängig von sich ändernden Adressen der Datenauslieferungseinrichtungen.

Indem der Geocode aus dem zu übertragenden Datensatz in eine vorbestimmte Relation zum Geocode mindestens einer Datenauslieferungseinrichtung bringbar ist, wird die Möglichkeit geboten, dass z.B. der zu übertragende Datensatz auch dann korrekt an die Datenauslieferungseinrichtung übertragen wird, wenn der Geocode aus dem zu übertragenden Datensatz nicht identisch zum Geocode der Datenauslieferungseinrichtung ist. Anhand der Relation kann die Servereinrichtung eine Menge von Datenauslieferungseinrichtungen ermitteln, deren Geocodes dem Geocode aus dem zu übertragenden Datensatz zuzuordnen sind. Eine Relation kann etwa der Abstand zwischen zwei Geocodes sein.

Aufgrund der den Geocodes zugeordneten Adressen kann die Servereinrichtung selbständig eine Verbindung zu einer Datenauslieferungseinrichtung mit einem bestimmten Geocode herstellen, um die Daten zu übertragen. Zur Speicherung der Geocodes können zugriffseffiziente Datenstrokturen verwendet werden. Die Adressen können als Liste zum jeweiligen Geocode gespeichert werden. Der Geocode kann eine Referenz auf die entsprechende Liste speichern.

Das Ermitteln der den Geocodes zugeordneten Adressen kann das Ermitteln von Adressen für Geocodes umfassen, welche sich in einem Umkreis zum Geocode der Datenauslieferungseinrichtung befinden. Damit kann ein Datensatz unter Angabe eines einzelnen Geocodes an mehrere Datenauslieferungseinrichtungen gleichzeitig übertragen werden.

In einer Ausführungsform kann der Datenblock mit Nutzdaten mindestens einen Datenblock mit ersten Nutzdaten und mindestens einen Datenblock mit zweiten Nutzdaten umfassen, wobei die Servereinrichtung eine Aktualisierung mindestens eines Datenblockes mit zweiten Nutzdaten durchführt. Damit kann ein Datensatz mit zusätzlichen Nutzdaten versehen werden, welche etwa von dem Bearbeiter des Datensatzes nicht bereitgestellt werden können.

Das Aktualisieren des mindestens einen Datenblockes mit zweiten Nutzdaten kann in Abhängigkeit vom Geocode des Datensatzes erfolgen. Der Datensatz kann so in vorteilhafter Weise mit standortspezifischen Nutzdaten versehen werden. So kann etwa als zweite Nutzdaten standortspezifische Werbung dem Datensatz hinzugefügt werden. Die zweiten Nutzdaten wiederum können mit einem Geocode versehen, sodass die Aktualisierung des Datensatz automatisch erfolgen kann.

Vorteilhaft ist es, wenn das Übertragen des Datensatzes an die mindestens eine Datenauslieferungseinrichtung nach einer Aktualisierung von zweiten Nutzdaten erfolgt.

Das Übertragen des Datensatzes an eine Datenauslieferungseinrichtung kann nach einer Anfrage durch die Datenauslieferungseinrichtung erfolgen, wobei die Anfrage den Geocode der anfragenden Datenauslieferungseinrichtung enthält. Die Datenauslieferungseinrichtung kann sich so selbst mit Daten versorgen, wenn etwa die auf der Datenauslieferungseinrichtung gespeicherten Daten verloren gehen.

In einer Ausführungsform werden nur aktualisierte Nutzdaten von der Servereinrichtung zur Datenauslieferungseinrichtung übertragen.

Das Aktualisieren der zweiten Nutzdaten kann ein Abfragen und Empfangen von Daten von mindestens einem Datenprovider und ein Ersetzen der zweiten Nutzdaten mit den empfangenen Daten des Datenproviders umfassen, wobei das Abfragen der Daten in Abhängigkeit von dem Geocode des zu aktualisierenden Datensatzes erfolgen kann. Dies hat den Vorteil, dass die zweiten Nutzdaten, welche dem Datensatz hinzugefügt werden sollen, nicht auf der Servereinrichtung gespeichert werden müssen. Die zweiten Nutzdaten können unabhängig von den zu übertragenen Datensätzen durch einen Datenprovider erstellt werden, mit einem Geocode versehen werden und zur Abfrage durch die Servereinrichtung bereitgestellt werden.

Das Aktualisieren der zweiten Nutzdaten kann automatisch und in vorgebbaren Zeitintervallen erfolgt. Das Zeitintervall und die Art der Nutzdaten kann in dem Datensatz vorgegeben werden.

Das Übertragen von Daten von der Servereinrichtung zur Datenauslieferungseinrichtung kann ein Überschreiben der Daten auf der Datenauslieferungseinrichtung bewirken.

In einer bevorzugten Ausführungsform sind nur auswählbare Datenblöcke mit Nutzdaten von der Datenauslieferungseinrichtung zum Endgerät übertragbar, wobei vor dem Übertragen der ausgewählten Datenblöcke eine drahtlose Verbindung zwischen der Datenauslieferungseinrichtung und dem Endgerät herstellbar ist und
wobei das Herstellen der Verbindung abhängig von einer Bestätigung auf dem Endgerät sein kann.

Die Datenblöcke für die Übertragung von der Datenauslieferungseinrichtung zum Endgerät können an der Datenauslieferungseinrichtung oder an dem Endgerät ausgewählt werden.

Nach dem Übertragen von Daten von der Datenauslieferungseinrichtung zum Endgerät kann die Verbindung zwischen der Datenauslieferungseinrichtung und dem Endgerät durch die Datenauslieferungseinrichtung getrennt werden.

Bevorzugt kann in der Servereinrichtung von jeder Datenauslieferungseinrichtung der Geocode der Datenauslieferungseinrichtung und die dem Geocode zuzuordnende Adresse empfangen und gespeichert werden, wobei die Adresse eine Netzwerkadresse, Email-Adresse oder Telefonnummer umfasst.

Die Datenauslieferungseinrichtung kann so ausgestaltet sein, dass sie nach Aktivierung oder nach Änderung des Standortes ihren Geocode und die dem Geocode zugehörige Adresse automatisch an die Servereinrichtung übertragen kann.

Das Endgerät kann ein Mobiltelefon, welches drahtlos mit der Datenauslieferungseinrichtung verbunden werden kann, ein tragbarer Kleincomputer, welcher drahtlos oder drahtgebunden mit der Datenauslieferungseinrichtung verbunden werden kann oder ein Bildschirm zur Darstellung der übertragenen Daten sein. Eine drahtlose Verbindung kann z.B. eine WLAN-Verbindung oder eine Bluetooth-Verbindung sein.

Des Weiteren wird durch die Erfindung eine Servereinrichtung bereitgestellt, welche mit mindestens einer Sendeeinrichtung und mit mindestens einer Datenauslieferungseinrichtung, welche eine Speichereinrichtung aufweist, verbindbar ist, wobei die Servereinrichtung ausgestaltet ist zum
- Empfangen eines Datensatzes von der mindestens einen Sendeeinrichtung, wobei der Datensatz zumindest einen Datenblock mit Nutzdaten und einen Datenblock mit mindestens einem Geocode umfasst; und
- Übertragen des Datensatzes an mindestens eine Datenauslieferungseinrichtung, deren Geocode in einer vorbestimmten Relation zu dem mindestens einen Geocode aus dem Datenblock des Datensatzes steht, zum permanenten Speichern des übertragenen Datensatzes in der Speichereinrichtung der Datenauslieferungseinrichtung und zum Bereithalten des Datensatzes in der Datenauslieferungseinrichtung zur Übertragung an mindestes ein Endgerät, wobei das Übertragen des Datensatzes nach Erhalt einer Anfrage von der Datenauslieferungseinrichtung erfolgt, wobei die Anfrage den Geocode der Datenauslieferungseinrichtung enthält;
wobei
- den Geocodes der Datenauslieferungseinrichtungen Adressen von Datenauslieferungseinrichtungen zuordenbar sind,
- vor der Übertragung des Datensatzes für Geocodes, welche in der vorbestimmten Relation zu dem mindestens einen Geocode aus dem Datenblock des Datensatzes stehen, mindestens eine zugeordnete Adresse ermittelbar ist; und
- der Datensatz an die mindestens eine Datenauslieferungseinrichtung mit der mindestens einen ermittelten Adresse übertragbar ist.

Damit wird der Servereinrichtung ermöglicht, Datensätze mit einem vorbestimmten Creocode an mindestens eine Datenauslieferungseinrichtung zu übertragen. Die Auswahl der korrekten Datenauslieferungseinrichtungen, also der Datenauslieferungseinrichtungen, welche dem Geocode aus dem Datensatz zugeordnet sind, wird so effektiv gewährleisten.

Die Servereinrichtung kann so ausgestaltet sein, dass das Ermitteln der den Geocodes zugeordneten Adressen das Ermitteln von Adressen für Geocodes umfasst, welche sich in einem Umkreis der Geocodes befinden.

Der Datenblock mit Nutzdaten kann mindestens einen Datenblock mit ersten Nutzdaten und mindestens einen Datenblock mit zweiten Nutzdaten umfassen, wobei die Servereinrichtung so ausgestaltet ist, dass sie eine Aktualisierung mindestens eines Datenblockes mit zweiten Nutzdaten durchführen kann. Das Aktualisieren des mindestens einen Datenblockes mit zweiten Nutzdaten kann in Abhängigkeit vom Geocode des Datensatzes erfolgen. Das Übertragen des Datensatzes an die mindestens eine Datenauslieferungseinrichtung kann nach einer Aktualisierung von zweiten Nutzdaten erfolgen.

Vorteilhaft ist es, wenn die Servereizuichtung so ausgestaltet ist, dass sie nur aktualisierte Nutzdaten zur Datenauslieferungseinrichfiung überträgt.

Die Servereinrichtung ist vorzugsweise so ausgestaltet, dass das Aktualisieren der zweiten Nutzdaten ein Abfragen und Empfangen von Daten von mindestens einem Datenprovider und ein Ersetzen der zweiten Nutzdaten mit den empfangenen Daten des Datenproviders umfasst, wobei das Abfragen der Daten in Abhängigkeit von dem Geocode des zu aktualisierenden Datensatzes erfolgt.

Bevorzugt ist die Servereinrichtung derart ausgestaltet, dass sie von jeder Datenauslieferungseinrichtung den Geocode der Datenauslieferungseinrichtung und die dem Geocode zuzuordnende Adresse empfängt und speichert. Die Adresse kann eine Netzwerkadresse, Email-Adresse oder Telefonnummer umfassen. Damit kann die Servereinrichtung einem Geocode eine oder mehrere Adressen zuordnen, an welche der empfangene Datensatz zu übertragen ist.

Des Weiteren wird durch die Erfindung bereitgestellt eine Datenauslieferungseinrichtung, welche mit einer Servereinrichtung verbindbar ist, wobei die Datenausliefentagseinrichtung aufweist:
- eine Einrichtung zum Ermitteln eines Geocode, welcher indikativ für den Standort der Datenauslieferungseinrichtung ist,
- Mittel zum Übertragen des ermittelten Geocodes und einer der Datenauslieferungseinrichtung zugeordneten Adresse an die Servereinrichtung, wobei die Mittel zum Übertragen derart ausgestaltet sind, dass sie eine Übertragung des Geocodes und der Adresse veranlassen, wenn sich der Geocode oder die Adresse ändert,
- Mittel zum Empfangen eines von der Servereinrichtung übertragenen Datensatzes
- eine Speichereinrichtung zum permanenten Speichern des übertragenen Datensatzes in der Datenauslieferungseinrichtung, und
- Mittel zum Bereithalten des Datensatzes in der Datenauslieferungseinrichtung zur Übertragung an mindestes ein Endgerät.

Die Datenauslieferungseinrichtung kann so von sich aus gewährleisten, dass die für die Datenübertragung von der Servereinrichtung zur Datenauslieferungseinrichtung notwendigen Informationen (Geocode und Adresse) immer aktuell sind. Unnötige Anfragen zum Geocode an die Datenauslieferungseinrichtungen durch die Servereinrichtung können vermieden werden.

Die Servereinrichtung kann direkt nach dem Empfang eines Datensatzes von einer Sendeeinrichtung entscheiden, ob der Datensatz an mindestens eine Datenauslieferungseinrichtung übertragen werden kann. Ist eine Übertragung nicht möglich, kann die Servereinrichtung den empfangenen Datensatz speichern und/oder der Sendeeinrichtung mitteilen, dass eine Übertragung nicht möglich ist. Diese Entscheidungen kann die Servereinrichtung treffen, ohne dass hierfür eine Verbindung zu den Datenauslieferungseinrichtungen notwendig ist.

Die Datenauslieferungseinrichtung kann insbesondere so ausgestaltet sein, dass sie für die Durchführung eines Verfahrens gemäß der Verfahrensansprüche geeignet ist.

Bereitgestellt wird auch ein Verfahren zum Bereitstellen von Daten für die Übertragung auf mindestens ein Endgerät, wobei das mindestens eine Endgerät mit mindestens einer Datenauslieferungseinrichtung verbindbar ist, wobei die mindestens eine Datenauslieferungseinrichtung mit einer Servereinrichtung verbindbar ist, wobei die Servereinrichtung mit mindestens einer Sendeeinrichtung verbindbar ist, wobei der mindestens einen Datenauslieferungseinrichtung ein Geocode zuordenbar ist, und wobei die Servereinrichtung zumindest folgende Schritte ausführt:
- Empfangen eines Datensatzes von der mindestens einen Sendeeinrichtung,
wobei der Datensatz zumindest einen Datenblock mit Nutzdaten und einen Datenblock mit mindestens einem Geocode umfasst; und
- Übertragen des Datensatzes an mindestens eine Datenauslieferungseinrichtung, deren Geocode in einer vorbestimmten Relation zu dem mindestens einen Geocode aus dem Datenblock des Datensatzes steht.

Weitere Einzelheiten und Merkmale der Erfindung ergeben sich aus den Ansprüchen und der nachfolgenden Beschreibung in Verbindung mit der Zeichnung. Es zeigt
- Fig. 1: einen schematischen Aufbau einer Kommunikationseinrichtung zur Übertragung von Daten von einer Sendeeinrichtung zu mindestens einer mobilen Empfangseinrichtung;
- Fig. 2: einen Datensatz, welcher während der Übertragung von der Sendeeinrichtung zur mobilen Empfangseinrichtung an einer zwischen der Sendeeinrichtung und der Empfangseinrichtung vorgesehenen Servereinrichtung aktualisiert wird;
- Fig. 3: die Übertragung eines Datensatzes von einer stationären Sendeeinrichtung zu einer Servereinrichtung sowie die Übertragung eines Datensatzes von der Servereinrichtung an eine durch eine Netzwerkadresse identifizierte Datenauslieferungseinrichtung;
- Fig.4: die Übertragung eines Datensatzes von einer stationären Sendeeinrichtung zu einer Servereinrichtung sowie die Übertragung eines Datensatzes von der Servereinrichtung zu einer durch einen Geocode identifizierten Datenauslieferungseinrichtung; und
- Fig. 5: ein Beispiel für die Übertragung eines Datensatzes an mehrere Datenauslieferungseinrichtungen mit Hilfe eines einzigen Geocodes.

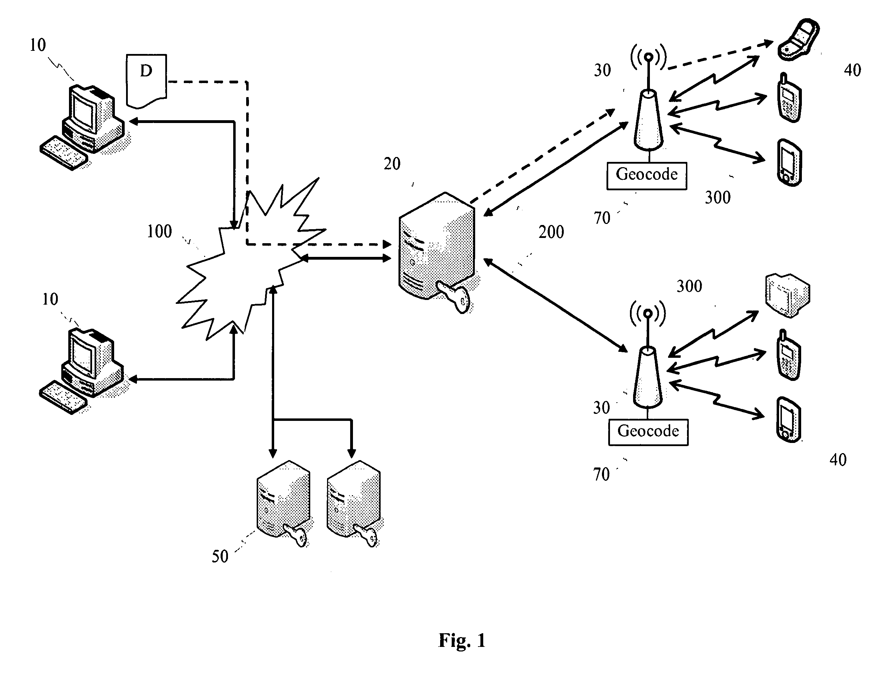

**Fig. 1** zeigt einen schematischen Aufbau einer Kommunikationseinrichtung, welche dazu ausgestaltet ist, Daten von einer stationären Sendeeinrichtung 10 zu mindestens einer Empfangseinrichtung 40 zu übertragen. Die Empfangseinrichtung 40 kann eine mobile Empfangseinrichtung, etwa ein Mobiltelefon, oder ein sonstiges Endgerät, etwa ein Bildschirm sein. Nachfolgend wird der Begriff Empfangseinrichtung für alle Arten von Endgeräten verwendet, welche dazu ausgestaltet sind Daten zu empfangen und zu speichern und/oder anzuzeigen.

Ein Benutzer erstellt an der stationären Sendeeinrichtung 10, welche ein herkömmlicher Computer sein kann, Daten, welche ein genau definiertes Datenformat aufweisen. Das Einhalten des definierten Datenformats kann durch Verwendung von Vorlagen unterstützt bzw. gewährleistet werden. Die vom Bearbeiter erstellten Daten können beispielsweise Audiodaten, Videodaten oder Daten in Textform sein.

Auf der stationären Sendeeinrichtung 10 werden die von dem Bearbeiter erstellten Daten zu einem Datensatz D zusammengefasst und mit dem aktuellen Datum und einem Geocode 65 versehen. Der Geocode gibt dabei den Standort einer oder mehrere Datenauslieferungseinrichtungen an. Für das Zuweisen eines Geocodes zu einem Datensatz kann der Benutzer beispielsweise auf einer elektronischen Landkarte den Standort einer Datenauslieferungseinrichtung 30 auswählen. Jeder Datenauslieferungseinrichtung ist ein eindeutiger Geocode 70, beispielsweise in Form von geografischer Länge und geografischer Breite zugeordnet. Durch Auswahl einer Datenauslieferungseinrichtung 30 auf der elektronischen Landkarte wird der Geocode 70 der ausgewählten Datenauslieferungseinrichtung 30 dem erstellten Datensatz D zugeordnet.

Der Datensatz D wird nach Fertigstellen bzw. nach der Zuordnung des Geocodes zu dem Datensatz D über ein Kommunikationsnetzwerk 100, beispielsweise über das Internet, auf eine Servereinrichtung 20 übertragen und dort gespeichert.

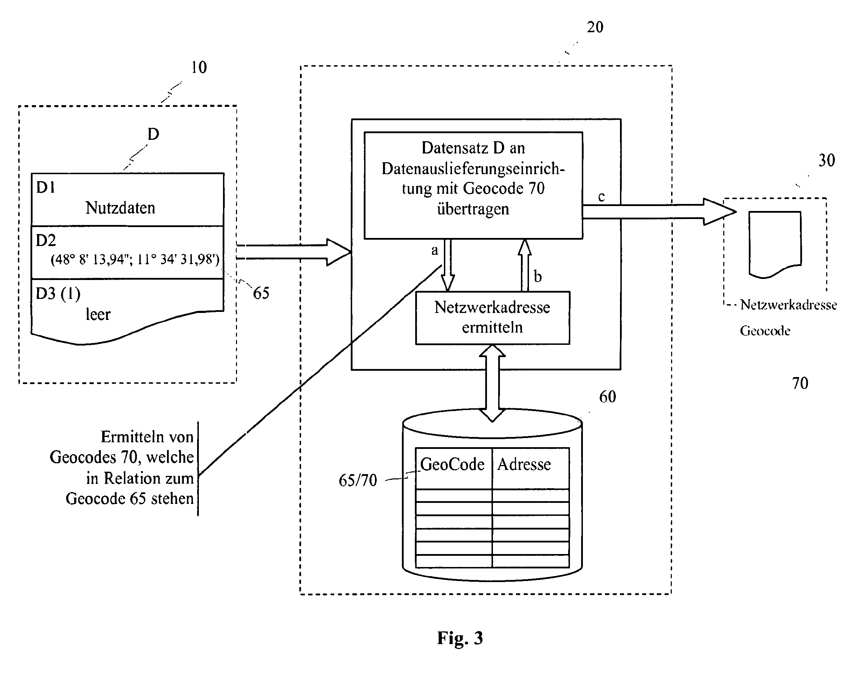

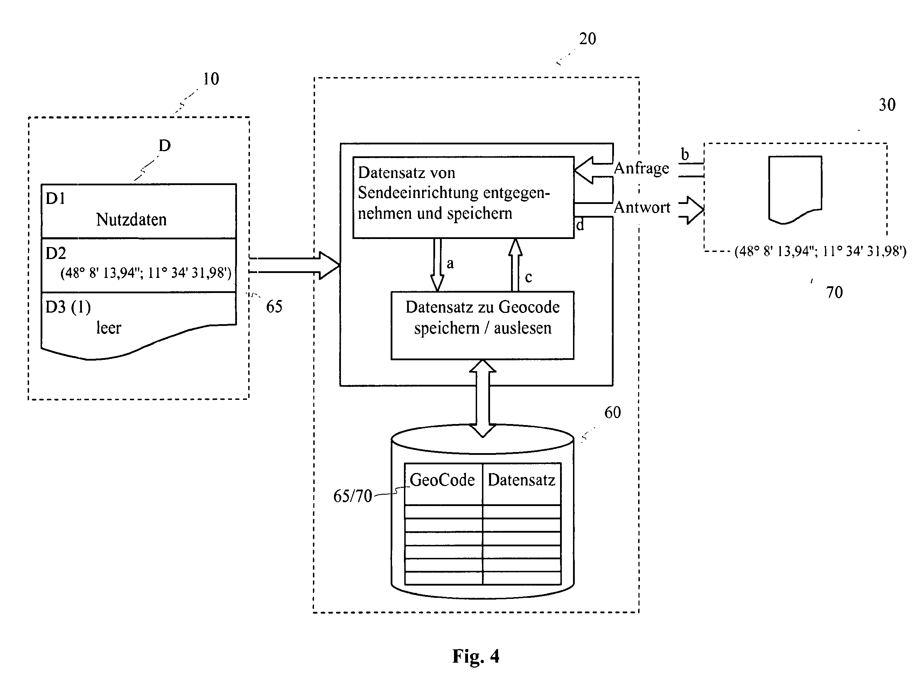

Nach dem Übertragen des Datensatzes D an die Servereinrichtung 20 bzw. nach dem Speichern des Datensatzes D auf der Servereinrichtung 20 wird dieser an die Datenauslieferungseinrichtung 30 weitergeleitet und dort gespeichert. Das Weiterleiten des Datensatzes D von der Servereinrichtung 20 zur Datenauslieferungseinrichtung 30 kann auf unterschiedliche Art und Weise erfolgen, welche im Zusammenhang mit der Fig. 3 und Fig. 4 näher beschrieben wird.

Die Servereinrichtung 20 ist über ein Kommunikationsnetzwerk 200 mit mindestens einer Datenauslieferungseinrichtung 30 verbunden. Dieses die Servereinrichtung 20 mit der Datenauslieferungseinrichtung 30 verbindende Kommunikationsnetzwerk kann beispielsweise das Internet sein aber auch eine LAN- bzw. WAN-Verbindung. In einer anderen Ausführungsform der Erfindung kann dieses Kommunikationsnetzwerk 200 auch mit Hilfe einer UMTS-Verbindung realisiert werden. Die Servereinrichtung 20 kann ein herkömmlicher Internet- bzw. WEB-Server sein oder aber auch eine speziell für die Übertragung von Daten D von einer stationären Sendeeinrichtung 10 zu einer mobilen Empfangseinrichtung 40 ausgestaltete Servereinrichtung.

Die Datenauslieferungseinrichtung 30 kann ein herkömmlicher Computer sein, welcher dazu ausgestaltet ist, eine Kommunikationsverbindung 300 mit mindestens einer Empfangseinrichtung 40 herzustellen. Vorzugsweise ist die Datenauslieferungseinrichtung 30 so ausgestaltet, dass sich mindestens eine Empfangseinrichtung 40 ad hoc mit der Datenauslieferungseinrichtung verbinden kann, um so bei Bedarf die auf die Datenauslieferungseinrichtung 30 übertragenen Daten D auf die Empfangseinrichtung 40 zu übertragen und dort zu speichern oder anzuzeigen.

Die Datenauslieferungseinrichtung 30 weist vorzugsweise eine Speichereinrichtung auf, auf welcher die übertragenen Daten D permanent gespeichert werden können.

Die Datenauslieferungseinrichtung 30 kann zur Verbindung der Empfangseinrichtung 40 mit der Datenauslieferungseinrichtung 30 unterschiedliche Schnittstellen vorsehen. Beispielsweise kann die Datenauslieferungseinrichtung 30 eine Bluetooth-Schnittstelle vorsehen, um darüber eine Verbindung mit Bluetooth-fähigen mobilen Empfangseinrichtungen 40 herzustellen. Alternativ oder zusätzlich kann aber auch eine WLAN-Schnittstelle, eine USB-Schnittstelle oder sonstige Schnittstellen zur Herstellung einer Verbindung zwischen der Datenauslieferungseinrichtung 30 und den Empfangseinrichtungen 40 vorgesehen sein.

Ein Benutzer einer mobilen Empfangseinrichtung 40 kann so direkt vor Ort standortbezogene Daten von der Datenauslieferungseinrichtung 30 abrufen und auf seine mobile Empfangseinrichtung 40 übertragen. Dabei entstehen für den Benutzer der mobilen Empfangseinrichtung 40 keinerlei Verbindungskosten, da keine Verbindung zu einem Telefon- bzw. Mobilfunkbetreiber notwendig ist.

Die Datenauslieferungseinrichtung 30 ist in einer Ausführungsform der Erfindung so ausgestaltet, dass sie, sobald sich eine mobile Empfangseinrichtung 40 in Reichweite zur Datenauslieferungseinrichtung 30 befindet, versucht, eine drahtlose Verbindung zu der mobilen Empfangseinrichtung 40 aufzubauen. Der Benutzer der mobilen Empfangseinrichtung 40 kann den von der Datenauslieferungseinrichtung 30 angefragten Verbindungsaufbau bestätigen oder ablehnen.

Im Falle einer Ablehnung wird der Versuch eines Verbindungsaufbaus zwischen der Datenauslieferungseinrichtung 30 und der entsprechenden mobilen Empfangseinrichtung 40 abgebrochen, und es werden keine weiteren Anfragen an die entsprechende mobile Empfangseinrichtung 40 mehr gesendet.

Im Falle einer Bestätigung können die auf der Datenauslieferungseinrichtung 30 gespeicherten Daten D automatisch auf die mobile Empfangseinrichtung 40 übertragen werden und dort gespeichert werden bzw. auf der mobilen Empfangseinrichtung 40 angezeigt werden. Nach dem Übertragen der Daten D unterbricht die Datenauslieferungseinrichtung 30 die Verbindung zwischen der Datenauslieferungseinrichtung 30 und der entsprechenden mobilen Empfangseinrichtung 40.

Bei einer besonderen Ausführungsform der Erfindung kann der Benutzer der mobilen Empfangseinrichtung 40 vor der Datenübertragung auswählen, welche Datenblöcke von der Datenauslieferungseinrichtung 30 auf die mobile Empfangseinrichtung 40 übertragen werden sollen.

Weil der Benutzer der mobilen Empfangseinrichtung einen Verbindungsaufbau zwischen der Datenauslieferungseinrichtung 30 und der mobilen Empfangseinrichtung zustimmen muss und weil der Benutzer entscheiden kann, welche Datenblöcke des Datensatzes D auf die mobile Empfangseinrichtung übertragen werden, wird ein besonders hohes Maß an Sicherheit erreicht.

Für die Kommunikation zwischen der Datenauslieferungseinrichtung 30 und der mobilen Empfangseinrichtung 40 hinsichtlich der Auswahl von zu übertragenden Datenblöcken auf die mobile Empfangseinrichtung kann nach dem Herstellen einer Verbindung zwischen der Datenauslieferungseinrichtung und der mobilen Empfangseinrichtung zunächst eine Navigationssoftware auf die mobile Empfangseinrichtung 40 übertragen werden, welche ausgestaltet ist, eine Navigation durch die Datenblöcke des auf der Datenauslieferungseinrichtung 30 gespeicherten Datensätze zu ermöglichen. Über die Navigationssoftware kann der Benutzer der mobilen Empfangseinrichtung die zu übertragenden Datenblöcke aus dem Datensatz D auswählen.

Die Navigationssoftware kann weiter ausgestaltet sein, die übertragenen Datenblöcke auf der mobilen Empfangseinrichtung darzustellen und zu speichern. Die Navigationssoftware kann auch so ausgestaltet sein, dass sie nur einen Bereich der Anzeigevorrichtung der mobilen Empfangseinrichtung einnimmt. Nach Auswahl der zu übertragenden Datenblöcke, kann die Navigationssoftware ausgeblendet werden, während nur mehr die übertragenen Inhalte in einem Bereich der Anzeigevorrichtung angezeigt werden. Die Anzeige kann auch mit transparentem Hintergrund erfolgen.

Die Datenauslieferungseinrichtung 30 kann ausgestaltet sein, die Kommunikation zwischen der Datenauslieferungseinrichtung 30 und den mobilen Empfangseinrichtungen 40 zu protokollieren, um beispielsweise Anpassungen aufgrund des Benutzerverhaltens in den Daten bzw. Datenblöcken des Datensatzes D vornehmen zu können. So können beispielsweise Datenblöcke, welche von Benutzern an einer Datenauslieferungseinrichtung 30 besonders selten nachgefragt werden, aus dem Datensatz D entfernt werden, indem ein neuer Datensatz D ohne den entsprechenden Datenblock erneut von der stationären Sendeeinrichtung 10 an die Datenauslieferungseinrichtung 30 übertragen wird.

Die von der Datenauslieferungseinrichtung 30 auf die mobilen Empfangseinrichtungen 40 zu übertragende Navigationssoftware wird vorzugsweise nur dann auf die mobilen Empfangseinrichtungen 40 übertragen, wenn sich auf der mobilen Empfangseinrichtung noch keine entsprechende Navigationssoftware befindet. Des Weiteren kann auch vorgesehen sein, dass die Navigationssoftware nur mit Einverständnis des Benutzers der mobilen Empfangseinrichtung 40 auf diese übertragen wird. In diesem Fall ist die Datenauslieferungseinrichtung 30 so ausgestaltet, dass vor der Übertragung der Daten D auf die mobile Empfangseinrichtung 40 die Daten so aufbereitet werden, dass diese auch ohne Navigationssoftware auf der mobilen Empfangseinrichtung 40 darstellbar sind.

In einer Ausführungsform der Erfindung kann die Navigationssoftware auf der mobilen Empfangseinrichtung 40 so ausgestaltet sein, dass ein Benutzer zu einem übertragenen Datensatz oder zu einzelnen Datenblöcken des Datensatzes Bewertungen abgeben kann. Diese Bewertungen können von der mobilen Empfangseinrichtung 40 auf die Datenauslieferungseinrichtung 30 übertragen und dort gespeichert werden.

Diese Bewertungen können auch an die Servereinrichtung 20 übertragen werden und dort mit Bewertungen von anderen Datenauslieferungseinrichtungen kumuliert werden. Die Betreiber der stationären Sendeeinrichtungen 10 können aufgrund dieser Bewertungen die Qualität der an den Datenauslieferungseinrichtungen 30 bereitgestellten Daten D weiter verbessern.

Die mobile Empfangseinrichtung kann etwa ein Mobiltelefon, ein tragbarer Computer, ein tragbarer Fernseher, etc. sein. Es kann aber auch ein stationäres Empfangsgerät vorgesehen sein, auf welches Daten von einer Datenauslieferungseinrichtung übertragen werden. Die Verbindung zu einer Empfangseinrichtung kann auch drahtgebunden erfolgen.

In einer bevorzugten Ausführungsform der Erfindung ist die Servereinrichtung 20 über ein Kommunikationsnetzwerk mit verschiedenen Datenprovidern 50 verbunden. Diese Datenprovider können beispielsweise aktuelle Daten zum Wetter, zum Verkehr, Nachrichten oder Ausschnitte von Landkarten bereitstellen. Mit diesen Daten der Datenprovider 50 werden die von den stationären Sendeeinrichtungen auf die Servereinrichtung 20 übertragenen Datensätze D, vorzugsweise periodisch, aktualisiert.

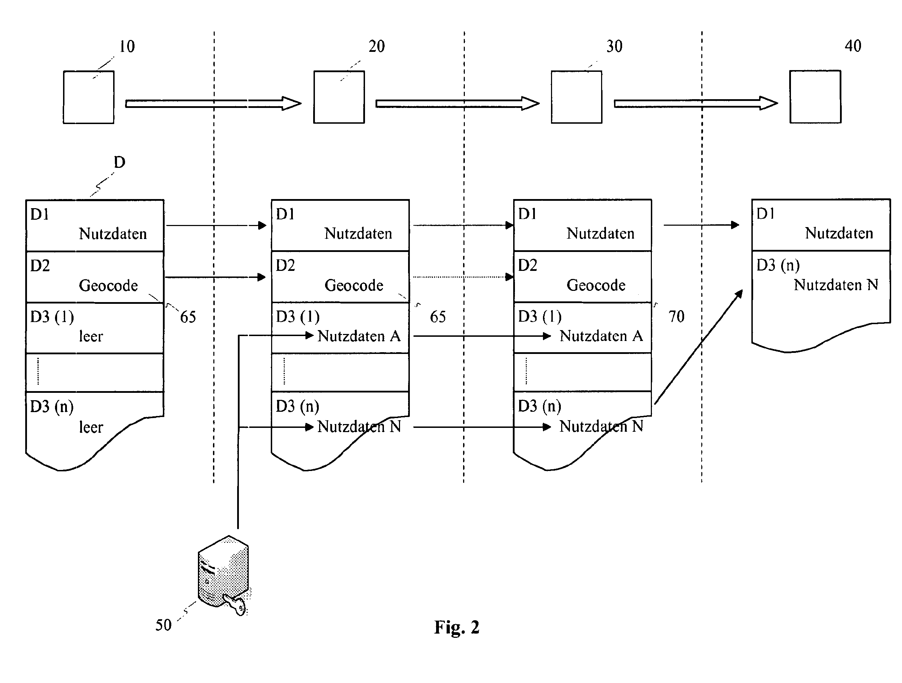

Weil der Datensatz D in einem Datenblock die Zieladresse des Datensatzes in Form eines Geocodes enthält, kann die Servereinrichtung die Datensätze entsprechend der Zieladressen aktualisieren. So kann beispielsweise die Servereinrichtung 20 einen Datensatz D, welcher für eine bestimmte Datenauslieferungseinrichtung 30 bestimmt ist, gezielt mit Verkehrsinformationen aktualisieren, welche für den Standort der adressierten Datenauslieferungseinrichtung 30 relevant sind. Eine detaillierte Beschreibung des Aktualisierungsvorgangs von Datensätzen D wird mit Bezug auf Fig. 2 gegeben.

In einer Ausführungsform kann die Servereinrichtung 20 ein Zugangsknoten bzw. ein Zugangscomputer eines Internetproviders sein, welcher den Zugang zum Internet für mindestens eine Datenauslieferungseinrichtung 30 zur Verfügung stellt. Die Datenauslieferungseinrichtung 30 kann dabei ein stationärer oder tragbarer Computer sein. Sobald sich der Computer 30 mit dem Internetprovider 20 verbindet, um ins Internet zu gelangen, kann der Computer 30 dem Internetprovider 20 den Geocode des Computers 30 mitteilen. Zusätzlich kann der Computer 30 dem Internetprovider 20 auch die Adresse, z.B. IP-Adresse, des Computers 30 mitteilen.

Sobald der Internetprovider 20 einen Datensatz D erhält, dessen Geocode dem Geocode des Computers 30 zuordenbar ist, kann der Internetprovider 20 den Datensatz D an den Computers 30 übertragen. Der Computer 30 kann den Datensatz D speichern oder auf einem Endgerät, z.B. einem Monitor, anzeigen. Für die Übertragung des Datensatzes D von dem Internetprovider 20 zum Computer 30 kann der Computer 30 eine Schnittstelle vorsehen, über welche der Internetprovider 20 eine Verbindung zum Computer 30 herstellen kann, um die Daten zu übertragen. Die Schnittstelle kann so ausgestaltet sein, dass über diese Schnittstelle nur Verbindungen vom Internetprovider 20 zum Computer 30 herstellbar sind, sodass andere Internetprovider oder Computer keine Verbindung über die Schnittstelle zum Computer 30 herstellen können.

Die Anzeige der Daten auf dem Endgerät 30, kann etwa innerhalb eines Internet-Browsers erfolgen, etwa in einer Werkzeugleiste oder in einem für die Anzeige der Daten vorgesehenen Bereich des Internet-Browsers.

Der Internetprovider 20 kann so den Computern 30 ortsabhängige Informationen, welche von einer Sendeeinrichtung 10 an den Internetprovider 20 übertragen werden, übermitteln, welche auf dem Bildschirm dann angezeigt werden können. Die Daten können etwa ortsabhängige Werbenachrichtung enthalten, welche von einem Werbetreibenden von der Sendeeinrichtung 10 and die Servereinrichtung 20 übertragen werden. Bei einem mobilen Computer 30 ist so gewährleistet, dass die übertragenen Daten auch ortsabhängig bzgl. des Geocodes des mobilen Computers 30 sind.

Die Datenauslieferungseinrichtung kann aber auch ein Hotspot 30, etwa ein WLAN-Hotspot sein. Der Hotspot überträgt während der Initialisierung, z.B. während der Inbetriebnahme, seinen Geocode an die Servereinrichtung 10, z.B. an den Internetprovider, welcher den Zugang zum Internet bereitstellt. Der Internetprovider kann dann Daten an den Hotspot übertragen, wobei die Daten abhängig vom Geocode des Hotspots sind. Die an den Hotspot übertragenen Daten werden auf dem Hotspot gespeichert, welcher hierfür eine Speichereinrichtung vorsieht. Sobald sich eine Endgerät, etwa ein WLAN-fähiger Kleincomputer, mit dem Hotspot verbindet, wird der Datensatz auf das Endgerät übertragen und dort angezeigt.

Ändert sich der Standort des Hotspots, teilt der Hotspot der Servereinrichtung dies automatisch mit und überträgt den Geocode des neuen Standorts, vorzugsweise zusammen mit der Adresse des Hotspots, an die Servereinrichtung. Die Servereinrichtung kann so auf die Standortänderung des Hotspots reagieren und bei den neuen Geocode des Hotspots bei der nächsten Datenübertragung berücksichtigen.

Der Hotspot kann aber auch mit einer zweiten Servereinrichtung 20 verbindbar sein, welcher nicht der Internetprovider ist, der den Zugang zum Internet für den Hotspot bereitstellt. Das Übertragen von Daten auf die Hotspots kann so unabhängig vom Internetprovider erfolgen. In dieser Ausführungsform überträgt der Hotspot den Geocode und die Adresse an die zweite Servereinrichtung 20. Die Sendeeinrichtungen 10 übertragen dann die Daten an die zweite Servereinrichtung, von wo aus sie dann (in Abhängigkeit vom Geocode) an die entsprechenden Hotspots übertragen werden. Die zweite Servereinrichtung 20 muss eine Verbindung zu den Hotspots nur aufbauen, wenn eine Datenübertragung erfolgen soll.

Die Datenauslieferungseinrichtung 30 bzw. ein Computer 30 bzw. ein Hotspot 30 kann eine Einrichtung zum Ermitteln des Geocodes, welcher indikativ für den Standort der Datenauslieferungseinrichtung 30 bzw. des Computers 30 bzw. des Hotspots 30 ist, aufweisen. Diese Einrichtung kann ein GPS-Gerät sein oder eine Einrichtung, mit welcher z.B. über die Funkzellen eines Mobilfunknetzes die Position der Datenauslieferungseinrichtung 30 bzw. des Computers 30 bzw. des Hotspots 30 mittels Triangulation ermittelbar ist. Die Position kann aber auch mittels Multilateration der Schnittpunkte der Reichweitengrenzen von WLAN-Stationen ermittelt werden, sofern die Position der WLAN-Stationen bekannt ist. Die Position kann auch anhand der dem Computer 30 zugeordneten IP-Adresse ermittelt werden.

**Fig. 2** zeigt schematisch die Datenübertragung eines Datensatzes D von einer stationären Sendeeinrichtung 10 zu einer mobilen Empfangseinrichtung 40, wobei der Datensatz D während der Übertragung mit Daten, welche von einem Datenprovider 50 bereitgestellt werden, aktualisiert wird.

Von einem Benutzer wird auf der stationären Sendeeinrichtung 10 ein Datensatz D erstellt. Dieser Datensatz enthält einen ersten Datenblock D1 mit Nutzdaten. Um die Datenauslieferungseinrichtung für den Datensatz D zu bestimmen, an welche der Datensatz D übertragen werden soll, enthält der Datensatz D einen zweiten Datenblock D2, in welchen ein Geocode (z.B. geografische Länge und geografische Breite) gespeichert wird. Der Geocode entspricht dem geografischen Standort einer oder mehrerer der Datenauslieferungseinrichtungen 30.

Das Hinterlegen des Geocodes in dem Datenblock D2 kann durch Auswahl einer auf einer elektronischen Landkarte angezeigten Datenauslieferungseinrichtung erfolgen. Zu der ausgewählten Datenauslieferungseinrichtung ermittelt die stationäre Sendeeinrichtung 10 den entsprechenden Geocode. Der ermittelte Geocode wird dann in dem Datenblock D2 abgelegt. Der Benutzer, welcher den Datensatz D erzeugt, benötigt somit keinerlei technische Informationen, wie beispielsweise eine Netzwerkadresse, um den Datensatz D für eine bestimmte Datenauslieferungseinrichtung 30 bereitzustellen.

Die Nutzdaten D1 können beispielsweise Informationen zu Sehenswürdigkeiten, Ausflugstipps, etc. in der näheren Umgebung des Standorts der Datenauslieferungseinrichtung 30 enthalten.

Bevor der Datensatz D an die Servereinrichtung 20 übertragen wird, kann der Benutzer an der stationären Sendeeinrichtung 10 dem Datensatz D noch weitere Datenblöcke D3(1) bis D3(n) hinzufügen. Diese zusätzlichen Datenblöcke können bei der Übertragung des Datensatzes D auf die Servereinrichtung 20 leer sein. Die zusätzlichen Datenblöcke werden von der Servereinrichtung 20 mit Nutzdaten A bis N gefüllt, wobei die Nutzdaten A bis N von einem oder von mehreren Datenprovidern 50 bereitgestellt werden und bei diesen angefragt werden. Hierzu muss der Benutzer einer stationären Sendeeinrichtung 10 für diese zusätzlichen Datenblöcke angeben, mit welcher Art von Nutzdaten die zusätzlichen Datenblöcke gefüllt werden sollen und in welchen Intervallen diese Datenblöcke von der Servereinrichtung 20 aktualisiert werden sollen.

Beispielsweise kann der Datenblock D3(1) vorgesehen sein, um Verkehrsdaten aufzunehmen. Nach Übertragung des Datensatzes D von der stationären Sendeeinrichtung 10 zu der Servereinrichtung 20 wird der Datensatz D auf der Servereinrichtung 20 gespeichert. In einem weiteren Schritt werden die für Datensatz D vorgesehenen weiteren Datenblöcke D3(1) bis D3(n) mit Nutzdaten gefüllt. Für den Datenblock D3(1), welcher Verkehrsdaten enthalten soll, ermittelt die Servereinrichtung 20 von einem Datenprovider 50, welcher Verkehrsdaten bereitstellt, die entsprechenden Daten und speichert diese in dem dafür vorgesehenen Datenblock in dem Datensatz D ab. Da der Servereinrichtung 20 aufgrund der im Datenblock D2 hinterlegten Adresse in Form eines Geocodes der Standort der Datenauslieferungseinrichtung 30 bekannt ist, kann die Servereinrichtung 20 entsprechende standortbezogene Verkehrsdaten von dem Datenprovider 50 abfragen und dem entsprechenden Datensatz D zuordnen.

Ein weiterer zusätzlicher Datenblock D3 kann etwa dafür vorgesehen sein, standortbezogene Wetterdaten in den Datensatz D mit aufzunehmen. Zusätzlich können in weiteren Datenblöcken D3 beispielsweise Straßenkarten von der Umgebung des Standorts der Datenauslieferungseinrichtung 30 hinterlegt werden. In einem noch weiteren Datenblock D3 kann auch standortbezogene Werbung in den Datensatz D integriert werden. Damit lässt sich eine gezielte standortspezifische Werbung realisieren, wobei die Streuverluste, welche sich bei herkömmlicher mobiler Werbung ergeben, minimiert werden können.

Die Art der Nutzdaten (z.B. Verkehrsinformation, Wetterdaten, Landkarten der Umgebung, etc.) mit welchen die zusätzlichen Datenblöcke D3(1) bis D3(n) durch die Servereinrichtung 20 gefüllt werden sollen und die Intervalle in welchen diese zusätzlichen Datenblöcke von der Servereinrichtung 20 aktualisiert werden sollen, kann für jeden Datensatz oder für alle Datensätze gemeinsam als Anweisung von der Sendeeinrichtung 10 an die Servereinrichtung 20 übertragen werden. Die Anweisung kann auch den Datenprovider spezifizieren, von welchem die Daten angefragt werden sollen. Die Servereinrichtung 20 nimmt die Anweisung entgegen und aktualisiert die Datenblöcke D3(1) bis D3(n) gemäß der entgegengenommenen Anweisung. Die Servereinrichtung kann auch mehrere Anweisungen für einen Datensatz entgegennehmen.

Am Beispiel mit zwei auf einer Servereinrichtung 20 übertragenen und dort gespeicherten Datensätzen soll dies verdeutlicht werden.

Beispielsweise kann eine Anweisung für den Datenblock D3(1) eines ersten Datensatzes enthalten:
- Art:: Verkehrsinformation
- Datenprovider:: www.xyz.com/traffic.htm?L= 48;8;13;94&B=11;34;31;98
- Intervall:: 1 Stunde

Damit kann der Datenblock D3(1) eines ersten Datensatzes stündlich mit Verkehrinformationen aktualisiert werden. Der Parameter L= 48;8;13;94&B=11;34;31;98 gibt dabei den Standort der Datenauslieferungseinrichtung 30 an, für welche der erste Datensatz D bestimmt ist.

Eine Anweisung für den Datenblock D3(1) eines zweiten Datensatzes kann enthalten:
- Art:: Wetter
- Datenprovider:: www.abc.com/wetter.htm?L= 52;8;13;91&B=12;33;31;18
- Intervall:: 2 Stunden

Damit kann der Datenblock D3(1) eines zweiten Datensatzes alle zwei Stunden mit Wetterdaten aktualisiert werden. Der Parameter L= 48;8;13;94& B=11;34;31;98 gibt wiederum den Standort der Datenauslieferungseinrichtung 30 an, für welche der zweite Datensatz D bestimmt ist.

Für die Datenblöcke D3(2) beider Datensätze kann eine gemeinsame Anweisung an die Servereinrichtung übertragen werden. Diese kann beispielsweise enthalten:
- Art:: Börse
- Datenprovider:: www.jkl.net/index.htm?idx=dax
- Intervall:: 15 Minuten

Damit werden alle Datenblöcke D3(2) der Datensätze viertelstündlich mit Kursdaten eines ausgewählten Aktienindex aktualisiert.

Anweisungen für einzelne Datenblöcke einzelner Datensätze können bereits im auf die Servereinrichtung übertragenen Datensatz, vorzugsweise im entsprechenden Datenblock, enthalten sein.

Anweisungen, welche für bestimmte Datenblöcke aller Datensätze bestimmt sind, können in einer Ausführungsform getrennt von den Datensätzen auf die Servereinrichtung übertragen und dort gespeichert werden. Die übertragenen Anweisungen können von der Servereinrichtung auch in den entsprechenden Datenblöcken aller Datensätze gespeichert werden, sodass die Servereinrichtung eine Aktualisierung eines Datensatzes bzw. einzelner Datenblöcke immer nach dem gleichen Schema vornehmen kann.

Nachdem der Datensatz D auf der Servereinrichtung 20 mit Nutzdaten, welche von einem Datenprovider angefragt werden, vervollständigt bzw. aktualisiert wurde, wird der Datensatz D an die Datenauslieferungseinrichtung 30 übertragen. Bei erstmaligem Übertragen des Datensatzes D an die Datenauslieferungseinrichtung 30 wird der gesamte Datensatz D übertragen, während bei wiederholtem Übertragen des Datensatzes nur solche Datenblöcke D1 bis D3 übertragen werden müssen, welche sich seit der letzten Aktualisierung des Datensatzes geändert haben.

Nach der Aktualisierung eines Datenblockes wird der Datensatz an die Datenauslieferungseinrichtung 30 übertragen, sodass auch dort unmittelbar nach der Aktualisierung die aktuellen Daten zur Verfügung stehen.

Wird beispielsweise nur der Datenblock D3(1) mit Daten vom Datenprovider 50 aktualisiert, so muss lediglich dieser Datenblock an die Datenauslieferungseinrichtung 30 übertragen werden. Die Auswahl der Datenauslieferungseinrichtung 30, an welche der Datensatz D übertragen werden muss, erfolgt mit Hilfe der in dem Datenblock D2 angegebenen Geocode, wobei der Datenblock D2 mehrere Geocodes enthalten kann.

Zwei Varianten, wie ein Datensatz bzw. ein Datenblock an eine Datenauslieferungseinrichtung 30 übertragen werden kann, werden mit Bezug auf Fig. 3 und Fig. 4 näher beschrieben.

Die an die Datenauslieferungseinrichtung 30 übertragenen Daten werden dort permanent gespeichert. Eine Verbindung 200 zwischen der Servereinrichtung 20 und der Datenauslieferungseinrichtung 30 ist daher nur zum Zwecke des Übertragens von Datensätzen D auf die Datenauslieferungseinrichtung 30 notwendig. Von der Datenauslieferungseinrichtung 30 gesammelte bzw. von den mobilen Empfangseinrichtungen 40 entgegengenommene Daten für eine statistische Auswertung, beispielsweise eines Nutzerverhaltens, können bei Bedarf von der Datenauslieferungseinrichtung 30 an die Servereinrichtung 20 übertragen werden. Das Übertragen solcher Daten kann beispielsweise auf Anforderung durch die Servereinrichtung 20 erfolgen.

Als letzter Schritt der Datenübertragung zwischen der Sendeeinrichtung 10 und einer mobilen Empfangseinrichtung 40 wird der auf der Datenauslieferungseinrichtung 30 gespeicherte Datensatz D an die mobile Empfangseinrichtung 40 übertragen.

Wie bereits mit Bezug auf Fig. 1 beschrieben, kann entweder der gesamte Datensatz D auf die mobile Empfangseinrichtung 40 übertragen werden oder nur ausgewählte Datenblöcke des Datensatzes D. Ein Benutzer einer mobilen Empfangseinrichtung 40 kann so gezielt Nutzdaten auf sein Empfangsgerät übertragen, welche für ihn von besonderem Interesse sind. Die Navigationssoftware auf der mobilen Empfangseinrichtung 40 bzw. die Software, welche für die Übertragung der Daten von der Datenauslieferungseinrichtung 30 auf die mobile Empfangseinrichtung 40 vorgesehen ist, können so ausgestaltet sein, dass bestimmte Datenblöcke unabhängig von der Auswahl der zu übertragenden Datenblöcke durch den Benutzer auf die mobile Empfangseinrichtung 40 übertragen werden.

So können beispielsweise in dem Datensatz D Datenblöcke vorgesehen werden, welche ortsgebundene Werbung als Nutzdaten bereitstellen, wobei solche Datenblöcke in jedem Fall auf die mobile Empfangseinrichtung 40 übertragen werden. Damit ist eine besonders effiziente ortsgebundene Werbung realisierbar.

Solche mit Werbeinhalten versehene Datenblöcke können in einem dafür vorgesehenen Bereich der Navigationssoftware auf der mobilen Empfangseinrichtung eingeblendet werden.

Anstelle einer Auswahl von Datenblöcken über eine auf die mobile Empfangseinrichtung übertragene Navigationssoftware, kann die Auswahl auch auf der Datenauslieferungseinrichtung 30 vorgesehen sein. Nach dem Verbindungsaufbau zwischen der Datenauslieferungseinrichtung 30 und der mobilen Empfangseinrichtung 40 kann der Benutzer der Empfangseinrichtung 40 an der Datenauslieferungseinrichtung 30 auswählen, welche Datenblöcke auf die Empfangseinrichtung übertragen werden sollen. Die Datenauslieferungseinrichtung 30 kann hierzu z.B. eine berührungssensitive Anzeigeeinrichtung vorsehen.

**Fig. 3** zeigt eine erste Variante für die Übertragung eines Datensatzes von der Servereinrichtung 20 auf die Datenauslieferungseinrichtung 30. Der auf der stationären Sendeeinrichtung 10 erzeugte Datensatz enthält im Datenblock D2 den Geocode (geografische Breite und geografische Länge) der Datenauslieferungseinrichtung. Der Datensatz D wird an die Servereinrichtung 20 übertragen und dort in einer Speichereinrichtung, beispielsweise einer Datenbank gespeichert.

In der in Fig. 3 gezeigten Variante wird der Datensatz D mittels eines Push-Verfahrens von der Servereinrichtung 20 auf die Datenauslieferungseinrichtung 30 übertragen.

Zusammen mit dem Datensatz D, welcher den Geocode in dem Datenblock D2 enthält, wird eine zu dem Geocode gehörende Netzwerkadresse der Datenauslieferungseinrichtung 30 in der Datenbank 60 gespeichert. Zu diesem Zweck ist vorgesehen, dass sich eine Datenauslieferungseinrichtung 30 bei der Servereinrichtung 20 anmelden muss und im Zuge der Anmeldung der Servereinrichtung 20 den Geocode sowie die dazugehörige Netzwerkadresse bereitstellen muss. Dies kann beispielsweise automatisch bei erstmaliger Inbetriebnahme der Datenauslieferungseinrichtung 30 erfolgen oder automatisch nachdem sich der Standort oder die Netzwerkadresse der Datenauslieferungseinrichtung 30 verändert hat.

Damit wird gewährleistet, dass ein mit einem bestimmten Geocode adressierter Datensatz immer an die richtige Datenauslieferungseinrichtung übertragen wird, selbst wenn sich der Standort einer Datenauslieferungseinrichtung ändert. Wird beispielsweise ein Datensatz für eine Datenauslieferungseinrichtung mit einem bestimmten Geocode auf der Servereinrichtung bereitgestellt, wobei keine Datenauslieferungseinrichtung mit diesem Geocode der Servereinrichtung bekannt gemacht wurde, kann der Datensatz auf der Servereinrichtung gespeichert werden und erst dann auf eine Datenauslieferungseinrichtung übertragen werden sobald sich eine Datenauslieferungseinrichtung mit diesem Geocode bei der Servereinrichtung anmeldet.

Der im empfangenen Datensatz enthaltene Geocode kann in Relation zu mindestens einem Geocode der Datenauslieferungseinrichtungen stehen. So kann etwa ein Geocode, bei dem die geographische Breite und Länge nur in Minuten angegeben ist, auf mehrere Geocodes von Datenauslieferungseinrichtungen abgebildet werden, bei denen Grad und Minute der geographische Breite und Länge mit geographischen Breite und Länge des Geocodes des Datensatzes übereinstimmen. Damit kann der Datensatz auch dann noch an die korrekte Datenauslieferungseinrichtung übertragen werden, wenn die Geocodes in dem Datensatz ungenau oder mit leichten Abweichungen angegeben werden. Die Relation kann auch vorsehen, dass der Geocode aus dem Datensatz auf Geocodes von Datenauslieferungseinrichtungen abgebildet wird, welche sich im Umkreis von z.B. 3 Minuten befinden.

Um mittels Push-Verfahrens Datensätze D an die entsprechenden Datenauslieferungseinrichtungen 30 übertragen zu können, wird in einem ersten Schritt a die Netzwerkadresse zu dem in dem Datensatz D gespeicherten Geocode ermittelt. Die Netzwerkadresse wird in einem weiteren Schritt b an die für die Datenübertragung zuständige Einheit in der Servereinrichtung 20 übermittelt. Die für die Datenübertragung zuständige Einheit in der Servereinrichtung 20 übermittelt in einem nächsten Schritt c den Datensatz an die Datenauslieferungseinrichtung 30 mit der entsprechenden Netzwerkadresse. Die Datenauslieferungseinrichtung 30 kann hierfür eine spezielle Schnittstelle vorsehen, über welche die Servereinrichtung 20 eine Kommunikationsverbindung zur Datenauslieferungseinrichtung 30 aufbauen kann, um darüber den Datensatz an die Datenauslieferungseinrichtung 30 zu übergeben.

Der Benutzer, welcher an der stationären Sendeeinrichtung 10 Datensätze D für eine oder mehrere mobile Empfangseinrichtungen erzeugt, kann hierbei die Adresse, an welche die erzeugten Datensätze zu übertragen sind, beispielsweise aus einer elektronischen Landkarte, auf welcher die Datenauslieferungseinrichtungen angezeigt werden, auswählen. Die auf einer elektronischen Landkarte zur Verfügung stehenden Datenauslieferungseinrichtungen 30 wiederum können aus der Datenbank 60 ermittelt werden, in welcher sämtliche sich an der Servereinrichtung 20 angemeldeten Datenauslieferungseinrichtungen 30 zusammen mit einer entsprechenden Netzwerkadresse gespeichert sind. Damit können den Benutzern der stationären Sendeeinrichtungen sämtliche verfügbare Datenauslieferungseinrichtungen 30 bereitgestellt werden.

Darüber hinaus kann der Benutzer erzeugte Datensätze D zur Übertragung an entsprechende Datenauslieferungseinrichtung 30 auf der Servereinrichtung 20 zur Verfügung stellen, selbst wenn eine Verbindung zwischen der Servereinrichtung 20 und der entsprechenden Datenauslieferungseinrichtung 30 beispielsweise aufgrund technischer Probleme nicht herstellbar ist. Die Servereinrichtung 20 kann so ausgestaltet sein, dass die Übertragung des Datensatzes D unmittelbar nach einem erfolgreichen Verbindungsaufbau zur Datenauslieferungseinrichtung 30 erfolgt.

Zusätzlich kann die Servereinrichtung 20 so ausgestaltet ein, dass bei einem Abbruch der Verbindung während einer Datenübertragung die Datenübertragung nach einer Wiederaufnahme der Verbindung zur Datenauslieferungseinrichtung 30 fortgesetzt oder neu durchgeführt wird.

**Fig. 4** zeigt die Übertragung eines Datensatzes von der Servereinrichtung 20 auf die Datenauslieferungseinrichtung 30 nach einem Poll-Verfahren. Der Datensatz D wird von der Sendeeinrichtung 10 auf die Servereinrichtung 20 übertragen und dort in einer Datenbank gespeichert. In der Datenbank kann zu jedem Datensatz ein Geocode, welcher in dem Datenblock D2 angegeben ist, abgespeichert werden.

Die Datenauslieferungseinrichtung 30 kann in fest vorgegebenen Intervallen eine Anfrage b an die Servereinrichtung 20 stellen, um die für die Datenauslieferungseinrichtung 30 relevanten Datensätze zu erhalten. Nach Erhalt einer Anfrage durch eine Datenauslieferungseinrichtung 30, wobei die Anfrage den Geocode der Datenauslieferungseinrichtung 30 enthält, ermittelt ein speziell dafür vorgesehenes Modul der Servereinrichtung 20 den entsprechenden Datensatz bzw. die entsprechenden Datensätze zu dem angefragten Geocode aus der Datenbank 60.

Die ermittelten Datensätze werden diesem Modul übergeben und als Reaktion auf die Anfrage b als Antwort d der anfragenden Datenauslieferungseinrichtung 30 zurückgegeben.

Die Datenauslieferungseinrichtung 30 kann unabhängig davon, ob sich Datensätze bzw. einzelne Datenblöcke der Datensätze geändert haben, diese von der Servereinrichtung 20 anfordern. Auch für die Variante des Poll-Verfahrens ist es vorteilhaft, wenn sich die Datenauslieferungseinrichtung 30 bei der Servereinrichtung 20 anmeldet, was beispielsweise bei einer ersten Inbetriebnahme eine Datenauslieferungseinrichtung vorgenommen werden kann, so dass der Servereinrichtung 20 sämtliche Datenauslieferungseinrichtungen 30 bekannt sind.

Der Vorteil bei einer Datenübertragung nach dem Poll-Verfahren ist, dass die Servereinrichtung 20 keine Informationen über die Netzwerkadressen der Datenauslieferungseinrichtungen 30 benötigt. Notwendig ist lediglich, dass jede der Datenauslieferungseinrichtungen 30 die Netzwerkadresse der Servereinrichtung 20 kennt, um entsprechende Anfragen an die Servereinrichtung 30 stellen zu können.

In einer weiteren Ausführungsform kann die Datenauslieferungseinrichtung 30 einen E-Mail-Client vorsehen, welcher über eine eindeutige E-Mail-Adresse verfügt, so dass die Datensätze von der Servereinrichtung 20 als E-Mail an die Datenauslieferungseinrichtung 30 übertragen werden können. Mit Bezug auf Fig. 3 ist es in diesem Fall notwendig, dass zu einem Geocode in der Datenbank 60 anstelle der Netzwerkadresse eine entsprechende E-Mail-Adresse abgespeichert ist. Unabhängig davon, welche Art von Adresse beim Push-Verfahren verwendet wird, findet die Abbildung eines Geocodes auf eine entsprechende Adresse (Netzwerkadresse, E-Mail-Adresse, etc.) in der Servereinrichtung 20 statt.

Dies hat den Vorteil, dass für die Erstellung der Inhalte eines Datensatzes, welcher für eine Datenauslieferungseinrichtung an einem bestimmten Standort vorgesehen ist, lediglich der Standort (in Form eines Geocodes) der Datenauslieferungseinrichtung benötigt wird. Die Daten, welche von den Datenprovidern 50 bereitgestellt werden, können standortspezifisch bereitgestellt werden, unabhängig davon welche Datenauslieferungseinrichtung sich an dem Standort befindet. Daten können durch einen Datenprovider 50 für einen bestimmten Standort auch dann bereitgestellt werden, wenn sich an dem bestimmten Standort keine Datenauslieferungseinrichtung befindet. Wird an dem bestimmten Standort zu einem späteren Zeitpunkt eine Datenauslieferungseinrichtung implementiert, werden die für diesen Standort durch den Datenprovider bereitgestellten Daten durch die Servereinrichtung 20 automatisch in die an diese Datenauslieferungseinrichtung übertragenen Datensätze integriert.

Bei einem Wechsel des Standortes einer Datenauslieferungseinrichtung ändert sich auch der Geocodes der Datenauslieferungseinrichtung. Der neuen Geocode wird der Servereinrichtung 20 mitgeteilt. Die Servereinrichtung kann dann automatisch Datensätze für diesen Geocode an diese Datenauslieferungseinrichtung übertragen.

Damit können beliebig viele Datenauslieferungseinrichtungen an verschiedenen Standorten bereitgestellt werden und/oder der Standort von Datenauslieferungseinrichtungen kann geändert werden, wobei die auf den Datenauslieferungseinrichtungen gespeicherten Datensätze aufgrund ihres Geocodes dynamisch angepasst werden, ohne dass durch die Betreiber der Datenauslieferungseinrichtungen manuell eingegriffen werden müsste. Im Falle eines Defektes einer Datenauslieferungseinrichtung kann diese einfach ausgetauscht werden. Nach Anmeldung an der Servereinrichtung 20 wird die neue Datenauslieferungseinrichtung automatisch mit entsprechenden Datensätzen versorgt.

Sowohl die Betreiber der Datenprovider als auch die Betreiber der stationären Sendeeinrichtungen benötigen keinerlei zusätzliche Informationen über den technischen Aufbau des Netzwerkes oder über die Datenauslieferungseinrichtungen.

Je nach dem, um welche Art von Adresse es sich handelt, werden die zu übertragenden Daten durch die Servereinrichtung 20 entsprechend aufbereitet und anschließend übertragen.

In einer weiteren, hier nicht gezeigten Ausführungsform kann zur Übertragung von Datensätzen D auf die Datenauslieferungseinrichtung 30 sowohl das Push- als auch das Poll-Verfahren nebeneinander oder in Kombination Verwendung finden. Dies hat den Vorteil, dass Datensätze, sobald diese etwa mit Daten, welche von verschiedenen Datenprovidern 50 zur Verfügung gestellt werden, aktualisiert worden sind, automatisch an die entsprechende Datenauslieferungseinrichtung 30 weitergeleitet werden können und dass unabhängig von einer Aktualisierung des Datensatzes D eine Datenauslieferungseinrichtung 30 Datensätze von der Servereinrichtung 20 abfragen kann. Dies ist beispielsweise dann von Vorteil, wenn die auf der Datenauslieferungseinrichtung 30 gespeicherten Datensätze zwischen zwei Aktualisierungen eines Datensatzes auf der Servereinrichtung 20 verloren gehen.

Damit wird es erstmals möglich, einem Benutzer ständig aktuelle standortbezogene Daten an einer mobilen Empfangseinrichtung bereitzustellen, wobei keine Verbindung zu einem Telefon- bzw. Mobilfunk-Provider notwendig ist. Darüber hinaus wird effizient gewährleistet, dass die an den Datenauslieferungseinrichtungen 30 bereitgestellten Daten immer aktuell sind, da sich oft ändernde Datenblöcke eines Datensatzes automatisch durch eine Servereinrichtung 20 aktualisierbar sind und im Anschluss an die Aktualisierung den entsprechenden Datenauslieferungseinrichtungen 30 bereitgestellt werden.

Ein weiterer Vorteil besteht darin, dass Datensätze nur jenen Datenauslieferungseinrichtungen 30 zur Verfügung gestellt werden, für welche die Daten von Relevanz sind, wobei die Adressierung einer Datenauslieferungseinrichtung besonders einfach mittels eines Geocodes vorgenommen werden kann.

Anstelle eines Datenblockes kann auch ein Datenstrom von der stationären Sendeeinrichtung 10 an eine Empfangseinrichtung 40 übertragen werden. Der Datenstrom kann die Zieladresse der Datenauslieferungseinrichtung in Form eines Geocodes enthalten. Die Servereinrichtung 20 kann unter Verwendung des Geocodes des Datenstromes den Datenstrom mit ortsabhängigen Informationen anreichern.

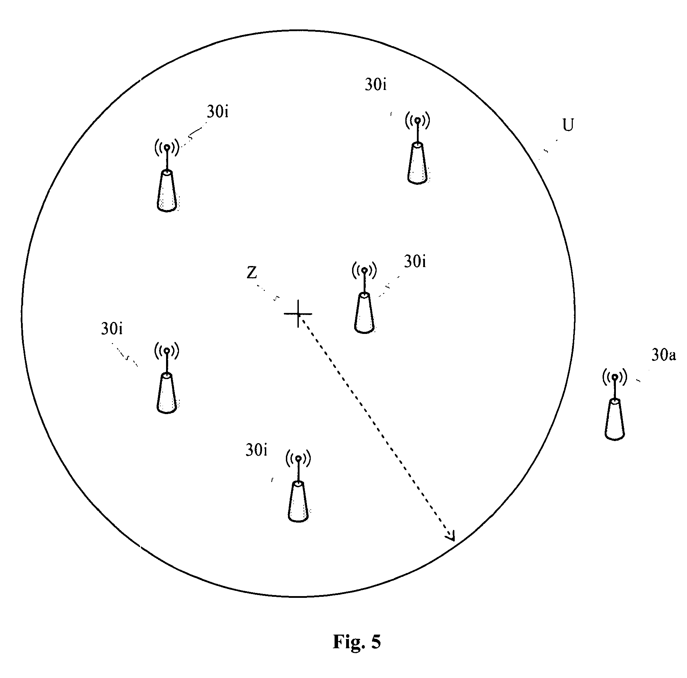

**Fig. 5** zeigt ein Beispiel mit mehreren Datenauslieferungseinrichtungen an welche ein Datensatz übertragen wird. Innerhalb eines Umkreise U zu einem Standort Z befinden sich mehrere Datenauslieferungseinrichtungen 30i. Eine Datenauslieferungseinrichtung 30a befindet sich außerhalb dieses Umkreises. Durch zusätzliche Angabe eines Umkreises U zum Geocode des Standortes Z im Datenblock D2 wird bestimmt, dass alle Datenauslieferungseinrichtungen 30i innerhalb dieses Umkreis U zu dem Geocode den Datensatz erhalten, bzw. von der Servereinrichtung 20 an diese Datenauslieferungseinrichtungen 30i übertragen wird. Die Servereinrichtung ermittelt alle sich innerhalb des Umkreises befindlichen Datenauslieferungseinrichtungen 30i und überträgt den Datensatz an diese. Der Umkreis ist dabei die oben beschriebene Relation zwischen dem Geocode des Datensatzes und den Geocodes der Datenauslieferungseinrichtungen.

Ein Umkreis kann auch zu den Datenauslieferungseinrichtungen 30i angegeben werden, sodass der Datensatz an weitere Datenauslieferungseinrichtungen übertragen wird, welche sich im Umkreis der einzelnen Datenauslieferungseinrichtungen 30i befinden.

Damit können unter Angabe eines einzelnen Geocodes an mehrere Datenauslieferungseinrichtungen Datensätze übertragen werden.

Eine automatische Übertragung wird in vorteilhafter Weise dadurch ermöglicht, dass die Datenauslieferungseinrichtungen der Servereinrichtung einen Wechsel des Standortes mitteilen. Sobald der Servereinrichtung ein Standortwechsel mitgeteilt wird, kann diese zum neuen Standort ermitteln, ob ein zu übertragender Datensatz vorliegt und diesen gegebenenfalls an die Datenauslieferungseinrichtung übertragen. Damit wird gewährleistet, dass selbst bei mobilen Datenauslieferungseinrichtungen (z.B. Datenauslieferungseinrichtungen, welche etwa zum Zwecke einer Werbeaktion durch eine Stadt oder mehrere Städte gefahren werden) immer der korrekte standortspezifische Datensatz übertragen wird. Damit lassen sich etwa zukünftige Werbeaktionen planen, indem etwa für verschiedene Städte auf der Servereinrichtung Datensätze mit den entsprechenden Geocodes bereitgestellt werden können. Sobald Datenauslieferungseinrichtungen in einer der Städte platziert werden, wird diesen automatisch der zugehörige Datensatz übertragen.

Bezugszeichenliste
- D: Datensatz
- D1: erste Nutzdaten
- D2: Datenblock mit Geocode
- D3: zweite Nutzdaten
- D3 (1): Datenblock 1 der zweiten Nutzdaten
- D3 (n): Datenblock n der zweiten Nutzdaten
- Z: Standort
- U: Umkreis um den Standort Z
- 10: stationäre Sendeeinrichtung
- 20: Servereinrichtung
- 30: Datenauslieferungseinrichtung
- 30i: Datenauslieferungseinrichtung innerhalb des Umkreises U
- 30a: Datenauslieferungseinrichtung außerhalb des Umkreises U
- 40: mobile Empfangseinrichtung
- 50: Datenprovider
- 60: Speichereinrichtung, z.B. Datenbank mit Liste von Geocodes und Adressen (z.B. Netzwerkadressen, eMail-Adressen, etc.)
- 65: Geocode im Datenblock D2
- 70: Geocode einer Datenauslieferungseinrichtung
- 100: erstes Kommunikationsnetzwerk
- 200: zweites Kommunikationsnetzwerk
- 300: drahtloses Kommunikationsnetzwerk

## Patentansprüche

1. Verfahren zum Bereitstellen von Daten für die Übertragung an mindestens ein Endgeräte (40), wobei das mindestens eine Endgerät (40) mit mindestens einer Datenauslieferungseinrichtung (30), welche eine Speichereinrichtung aufweist, verbindbar ist, wobei die mindestens eine Datenauslieferungseinrichtung (30) mit einer Servereinrichtung (20) verbindbar ist, wobei die Servereinrichtung (20) mit mindestens einer Sendeeinrichtung (10) verbindbar ist, wobei der mindestens einen Datenauslieferungseinrichtung (30) ein Geocode (70) zuordenbar ist, und wobei die Servereinrichtung (20) zumindest folgende Schritte ausführt:
- Empfangen eines Datensatzes (D) von der mindestens einen Sendeeinrichtung (10), wobei der Datensatz (D) zumindest einen Datenblock mit Nutzdaten und einen Datenblock (D2) mit mindestens einem Geocode (65) umfasst;
- Übertragen des Datensatzes (D) an mindestens eine Datenauslieferungseinrichtung (30), deren Geocode (70) in einer vorbestimmten Relation zu dem mindestens einen Geocode (65) aus dem Datenblock (D2) des Datensatzes (D) steht, zum permanenten Speichern des übertragenen Datensatzes (D) in der Speichereinrichtung der Datenauslieferungseinrichtuttg (30) und zum Bereithalten des Datensatzes (D) in der Datenauslieferungseinrichtung (30) zur Übertragung an mindestes ein Endgerät (40);
wobei bei der Sexvereinrichtung (20) den Geocodes (70) der Datenauslieferungseinrichtungen (30) Adressen von Datenauslieferungseinrichtungen (30) zuordenbar sind,
wobei vor der Übertragung des Datensatzes (D) für Geocodes (70), welche in der vorbestimmten Relation zu dem mindestens einen Geocode (65) aus dem Datenblock (D2) des Datensatzes (D) stehen, mindestens eine zugeordnete Adresse ermittelt wird,
wobei der Datensatz (D) an die mindestens eine Datenauslieferungseinrichtung (30) mit der mindestens einen ermittelten Adresse übertragen wird, und wobei der Datensatz in der Speichereinrichtung der Datenauslieferungseinrichtung permanent gespeichert wird.

2. Verfahren nach Anspruch 1, wobei das Ermitteln der den Geocodes (70) zugeordneten Adressen das Ermitteln von Adressen für Geocodes umfasst, welche sich in einem Umkreis (U) der Geocodes (70) befinden.

3. Verfahren nach einem der vorhergehenden Ansprüche, wobei der Datenblock mit Nutzdaten mindestens einen Datenblock (D1) mit ersten Nutzdaten und mindestens einen Datenblock (D3) mit zweiten Nutzdaten umfasst, und wobei die Servereinrichtung (20) eine Aktualisierung mindestens eines Datenblockes mit zweiten Nutzdaten (D3) durchführt.

4. Verfahren nach Anspruch 3, wobei das Aktualisieren des mindestens einen Datenblockes mit zweiten Nutzdaten (D3) in Abhängigkeit vom Geocode aus dem Datenblock (D2) des Datensatzes (D) erfolgt.

5. Verfahren nach Anspruch 3 oder 4, wobei das Übertragen des Datensatzes (D) an die mindestens eine Datenauslieferungseinrichtung (30) nach einer Aktualisierung von zweiten Nutzdaten (D3) erfolgt.

6. Verfahren nach Anspruch 3 oder 4, wobei das Übertragen des Datensatzes (D) an eine Datenauslieferungseinrichtung (30) nach einer Anfrage von der Datenauslieferungseinrichtung (30) erfolgt, wobei die Anfrage den Geocode der anfragenden Datenauslieferungseinrichtung (30) enthält.

7. Verfahren nach einem der Ansprüche 3 bis 6, wobei nur aktualisierte Nutzdaten (D3) von der Servereinrichtung (20) zur Datenauslieferungseinrichtung (30) übertragen werden.

8. Verfahren nach einem der Ansprüche 3 bis 7, wobei das Aktualisieren der zweiten Nutzdaten (D3) ein Abfragen und Empfangen von Daten von mindestens einem Datenprovider (50) und ein Ersetzen der zweiten Nutzdaten (D3) mit den empfangenen Daten des Datenproviders (50) umfasst, und wobei das Abfragen der Daten in Abhängigkeit von dem Geocode (D2) des zu aktualisierenden Datensatzes (D) erfolgt.

9. Verfahren nach einem der Ansprüche 3 bis 8, wobei das Aktualisieren der zweiten Nutzdaten (D3) automatisch und in vorgebbaren Zeitintervallen erfolgt.

10. Verfahren nach einem der vorhergehenden Ansprüche, wobei auswählbare Datenblöcke (D1, D3) von der Datenauslieferungseinrichtung (30) zum Endgerät (40) übertragen werden und wobei vor dem Übertragen der ausgewählten Datenblöcke eine drahtlose Verbindung (300) zwischen der Datenauslieferungseinrichtung (30) und dem Endgerät (40) hergestellt wird, wobei das Herstellen der Verbindung abhängig von einer Bestätigung auf dem Endgerät (40) ist.

11. Verfahren nach Anspruch 10, wobei die Datenblöcke (D1, D3) für die Übertragung von der Datenauslieferungseinrichtung (30) zum Endgerät (40) an der Datenauslieferungseinrichtung (30) oder an der Empfangseinrichtung (40) ausgewählt werden.

12. Verfahren nach einem der vorhergehenden Anspruch, wobei die Servereinrichtung von jeder Datenauslieferungseinrichtung (30) den Geocode der Datenauslieferungseinrichtung (30) und die dem Geocode zuzuordnende Adresse empfängt und speichert, wobei die Adresse eine Netzwerkadresse, Email-Adresse oder Telefonnummer umfasst.

13. Verfahren nach einem der vorhergehenden Ansprüche, wobei der Datensatz (D) an die mindestens eine Datenauslieferungseinrichtung (30) übertragen wird zum Speichern des Datensatzes (D) in der Datenauslieferungseinrichtung (30).

14. Servereinrichtung (20), welche mit mindestens einer Sendeeinrichtung (10) und mit mindestens einer Datenauslieferungseinrichtung (30), welche eine Speichereinrichtung aufweist, verbindbar ist, wobei die Servereinrichtung ausgestaltet ist zum
- Empfangen eines Datensatzes (D) von der mindestens einen Sendeeinrichtung (10), wobei der Datensatz (D) zumindest einen Datenblock mit Nutzdaten und einen Datenblock (D2) mit mindestens einem Geocode (65) umfasst; und
- Übertragen des Datensatzes (D) an mindestens eine Datenauslieferungseinrichtung (30), deren Geocode (70) in einer vorbestimmten Relation zu dem mindestens einen Geocode (65) aus dem Datenblock (D2) des Datensatzes (D) steht, zum permanenten Speichern des übertragenen Datensatzes (D) in der Speichereinrichtung der Datenauslieferungseinrichtung (30) und zum Bereithalten des Datensatzes (D) in der Datenauslieferungseinrichtung (30) zur Übertragung an mindestes ein Endgerät (40), wobei das Übertragen des Datensatzes nach Erhalt einer Anfrage von der Datenauslieferungseinrichtung erfolgt, wobei die Anfrage den Geocode der Datenauslieferungseinrichtung enthält;
wobei
- den Geocodes (70) der Datenauslieferungseinrichtungen (30) Adressen von Datenauslieferungseinrichtungen (30) zugeordnet sind;
- vor der Übertragung des Datensatzes (D) für Geocodes (70), welche in der vorbestimmten Relation zu dem mindestens einen Geocode (65) aus dem Datenblock (D2) des Datensatzes (D) stehen, mindestens eine zugeordnete Adresse ermittelt wird; und
- der Datensatz (D) an die mindestens eine Datenauslieferungseinrichtung (30) mit der mindestens einen ermittelten Adresse übertragbar ist.

15. Datenauslieferungseinrichtung (30), welche mit einer Servereinrichtung (20) verbindbar ist, wobei die Datenauslieferungseinrichtung aufweist:
- eine Einrichtung zum Ermitteln eines Geocodes (70), welcher indikativ für den Standort der Datenauslieferungseinrichtung ist,
- Mittel zum Übertragen des ermittelten Geocodes (70) und einer der Datenauslieferungseinrichtung zugeordneten Adresse an die Servereinrichtung (20), wobei die Mittel zum Übertragen derart ausgestaltet sind, dass sie eine Übertragung des Geocodes (70) und der Adresse veranlassen, wenn sich der Geocode oder die Adresse ändert,
- Mittel zum Empfangen eines von der Servereinrichtung (20) übertragenen Datensatzes (D),
- eine Speichereinrichtung zum permanenten Speichern des übertragenen Datensatzes (D) in der Datenauslieferungseinrichtung (30), und
- Mittel zum Bereithalten des Datensatzes (D) zur Übertragung an mindestes ein Endgerät (40).

## Claims

1. Method for providing data for the transfer to at least one terminal (40), whereby the at least one terminal (40) can be connected to at least one data delivery device (30) which has a storage device, whereby the at least one data delivery device (30) can be connected to a server device (20), whereby the server device (20) can be connected to at least one sending device (10), whereby a geocode (70) can be assigned to the at least one data delivery device (30) and whereby the server device (20) carries out at least the following steps:
- reception of a dataset (D) from the at least one sending device (10), whereby the dataset (D) comprises at least one data block with user data and a data block (D2) with at least one geocode (65);
- transfer of the dataset (D) to at least one data delivery device (30) the geocode (70) of which is in a predetermined relationship to the at least one geocode (65) from the data block (D2) of the dataset (D) for the permanent storage of the transferred dataset (D) in the storage device of the data delivery device (30) and for providing the dataset (D) in the data delivery device (30) for the transfer to at least one terminal (40),
whereby addresses of data delivery devices (30) can be assigned at the server device (20) to the geocodes (70) of the data delivery devices (30),
whereby at least one assigned address is determined before the transfer of the dataset (D) for geocodes (70) which are in the predetermined relationship to the at least one geocode (65) from the data block (D2) of the dataset (D),
whereby the dataset (D) is transferred to the at least one data delivery device (30) with the at least one determined address and whereby the dataset is permanently stored in the storage device of the data delivery device.

2. Method according to claim 1, whereby the determining of the addresses assigned to the geocodes (70) comprises the determining of addresses for geocodes, which are in the surroundings (U) of the geocodes (70).

3. Method according to one of the preceding claims, whereby the data block with user data comprises at least one data block (D1) with first user data and with at least one data block (D3) with second user data and whereby the server device (20) carries out an updating of at least one data block with second user data (D3).

4. Method according to claim 3, whereby the updating of the least one data block with second user data (D3) takes place depending on the geocode from the data block (D2) of the dataset (D).

5. Method according to claim 3 or 4, whereby the transfer of the dataset (D) to the at least one data delivery device (30) takes place after an updating of second user data (D3).

6. Method according to claim 3 or 4, whereby the transfer of the dataset (D) to a data delivery device (30) takes place after a request of the data delivery device (30), whereby the request contains the geocode of the requesting data delivery device (30).

7. Method according to one of the claims 3 to 6, whereby only updated user data (D3) are transferred from the server device (20) to the data delivery device (30).

8. Method according to one of the claims 3 to 7, whereby the updating of the second user data (D3) comprises a query and reception of data of at least one data provider (50) and a replacement of the second user data (D3) with the received data of the data provider (50) and whereby the query of the data takes place depending on the geocode (D2) of the dataset to be updated (D).

9. Method according to one of the claims 3 to 8, whereby the updating of the second user data (D3) takes place automatically and in presettable time intervals.

10. Method according to one of the preceding claims, whereby selectable data blocks (D1, D3) are transferred from the data delivery device (30) to the terminal (40) and whereby a wireless connection (300) is established between the data delivery device (30) and the terminal (40) before the transfer of the selected data blocks, whereby the establishing of the connection depends on a confirmation on the terminal (40).

11. Method according to claim 10, whereby the data blocks (D1, D3) for the transfer from the data delivery device (30) to the terminal (40) are selected on the data delivery device (30) or on the reception device (40).

12. Method according to one of the preceding claims, whereby the server device of each data delivery device (30) receives and stores the geocode of the data delivery device (30) and the address assigned to the geocode, whereby the address comprises a network address, an email address or a telephone number.

13. Method according to one of the preceding claims, whereby the dataset (D) is transferred to the at least one data delivery device (30) to store the dataset (D) in the data delivery device (30).

14. Server device (20) that can be connected to at least one sending device (10) and to at least one data delivery device (30) that has a storage device, whereby the server device is designed for
- receiving a dataset (D) of the at least one sending device (10), whereby the dataset (D) comprises at least one data block with user data and a data block (D2) with at least one geocode and
- transferring the dataset (D) to at least one data delivery device (30) the geocode (70) of which is in a predetermined relationship to the at least one geocode (65) from the data block (D2) of the dataset (D) for the permanent storage of the transferred dataset (D) in the storage device of the data delivery device (30) and for keeping the dataset (D) in the data delivery device (30) for the transfer to at least one terminal (40), whereby the transfer of the dataset takes place after having received a request from the data delivery device, whereby the request contains the geocode of the data delivery device,
whereby
- addresses of data delivery devices (30) are assigned to the geocodes (70) of the data delivery devices (30),
- at least one assigned address is determined before the transfer of the dataset (D) for geocodes (70) which are in the predetermined relationship to the at least one geocode (65) from the data block (D2) of the dataset (D) and
- the dataset (D) can be transferred to the at least one data delivery device (30) with the at least one determined address.

15. Data delivery device (30) that can be connected to a server device (20), whereby the data delivery device has:
- a device for determining a geocode (70), which is indicative of the location of the data delivery device,
- means for the transfer of the determined geocode (70) and of an address assigned to the data delivery device to the server device (20), whereby the means for transferring are designed such that they induce a transfer of the geocode (70) and of the address when the geocode or the address changes,
- means for the reception of a dataset (D) transferred by the server device (20),
- a storage device for the permanent storage of the transferred dataset (D) in the data delivery device (30) and
- means for keeping the dataset (D) for the transfer to at least one terminal (40).

## Revendications

1. Procédé pour mettre à disposition des données pour la transmission à au moins un terminal (40), le terminal qui existe au moins (40) pouvant être relié à au moins un dispositif de livraison de données (30) qui présente un dispositif de stockage, le dispositif de livraison de données qui existe au moins (30) pouvant être relié à un dispositif de serveur (20), le dispositif de serveur (20) pouvant être relié à au moins un dispositif d'envoi (10), un géocode (70) pouvant être associé au dispositif de livraison de données qui existe au moins (30) et le dispositif de serveur (20) exécutant au moins les étapes suivantes :
- réception d'un ensemble de données (D) du dispositif d'envoi qui existe au moins (10), l'ensemble de données (D) comprenant au moins un bloc de données avec des données utiles et un bloc de données (D2) avec au moins un géocode (65) ;
- transmission de l'ensemble de données (D) à au moins un dispositif de livraison de données (30) dont le géocode (70) est dans une relation prédéfinie par rapport au géocode qui existe au moins (65) du bloc de données (D2) de l'ensemble de données (D) pour le stockage permanent de l'ensemble de données (D) transmis dans le dispositif de stockage du dispositif de livraison de données (30) et pour tenir à disposition le jeu de données (D) dans le dispositif de livraison de données (30) pour la transmission à au moins un terminal (40),
des adresses de dispositifs de livraison de données (30) pouvant être assignées aux géocodes (70) des dispositifs de livraison de données (30) dans le dispositif de serveur (20),
au moins une adresse assignée étant déterminée avant la transmission de l'ensemble de données (D) pour les géocodes (70) qui sont dans la relation prédéfinie par rapport au géocode qui existe au moins (65) du bloc de données (D2) de l'ensemble de données (D),
l'ensemble de données (D) étant transmis au dispositif de livraison de données qui existe au moins (30) avec l'adresse déterminée qui existe au moins et l'ensemble de données (D) étant stocké de manière permanente dans le dispositif de stockage du dispositif de livraison de données.

2. Procédé selon la revendication 1, la détermination des adresses assignées aux géocodes (70) comprenant la détermination d'adresses pour les géocodes qui se trouvent dans un périmètre (U) des géocodes (70).

3. Procédé selon l'une des revendications précédentes, le bloc de données avec des données utiles comprenant au moins un bloc de données (D1) avec des premières données utiles et au moins un bloc de données (D3) avec des secondes données utiles et le dispositif de serveur (20) effectuant une actualisation d'au moins un bloc de données avec des secondes données utiles (D3).

4. Procédé selon la revendication 3, l'actualisation de l'ensemble de données qui existe au moins se faisant avec des secondes données utiles (D3) en fonction du géocode du bloc de données (D2) de l'ensemble de données (D).

5. Procédé selon la revendication 3 ou 4, la transmission de l'ensemble de données (D) au dispositif de livraison de données qui existe au moins (30) étant effectuée après une actualisation des secondes données utiles (D3).

6. Procédé selon la revendication 3 ou 4, la transmission de l'ensemble de données (D) à un dispositif de livraison de données (30) étant effectuée après une demande du dispositif de livraison des données (30), la demande contenant le géocode du dispositif de livraison des données (30) qui demande.

7. Procédé selon l'une des revendications 3 à 6, seulement des données utiles actualisées (D3) étant transmises par le dispositif de serveur (20) au dispositif de livraison de données (30).

8. Procédé selon l'une des revendications 3 à 7, l'actualisation des secondes données utiles (D3) comprenant une interrogation et une réception de données d'au moins un fournisseur de données (50) et un remplacement des secondes données utiles (D3) avec les données reçues du fournisseur de données (50) et l'interrogation de données ayant lieu en fonction du géocode (D2) de l'ensemble de données à actualiser (D).

9. Procédé selon l'une des revendications 3 à 8, l'actualisation des secondes données utiles (D3) se faisant automatiquement et à des intervalles de temps pouvant être prédéfinis.

10. Procédé selon l'une des revendications précédentes, des blocs de données pouvant être sélectionnés (D1, D3) étant transmis par le dispositif de livraison de données (30) au terminal (40) et une liaison sans fil (300) étant établie entre le dispositif de livraison des données (30) et le terminal (40) avant la transmission des blocs de données sélectionnés, l'établissement de la liaison étant dépendant d'une confirmation sur le terminal (40).

11. Procédé selon la revendication 10, les blocs de données (D1, D3) pour la transmission du dispositif de livraison de données (30) au terminal (40) étant sélectionnés sur le dispositif de livraison de données (30) ou sur le dispositif de réception (40).

12. Procédé selon l'une des revendications précédentes, le dispositif de serveur de chaque dispositif de livraison de données (30) recevant et mémorisant du dispositif de livraison de données (30) le géocode du dispositif de livraison de données (30) et l'adresse assignée au géocode, l'adresse comprenant une adresse de réseau, une adresse électronique ou un numéro de téléphone.

13. Procédé selon l'une des revendications précédentes, l'ensemble de données (D) étant transmis au dispositif de livraison de données qui existe au moins (30) pour stocker l'ensemble de données (D) dans le dispositif de livraison de données (30).

14. Dispositif de serveur (20) qui peut être relié à au moins un dispositif d'envoi (10) et à au moins un dispositif de livraison de données (30) qui présente un dispositif de stockage, le dispositif de serveur étant configuré pour
- recevoir un ensemble de données (D) d'au moins un dispositif d'envoi (10), l'ensemble de données (D) comprenant au moins un bloc de données avec des données utiles et un bloc de données (D2) avec au moins un géocode (65) et
- transmettre l'ensemble de données (D) à au moins un dispositif de livraison de données (30) dont le géocode (70) est dans une relation prédéterminée avec au moins un géocode (65) du bloc de données (D2) de l'ensemble de données (D) pour le stockage permanent de l'ensemble de données transmis (D) dans le dispositif de stockage du dispositif de livraison de données (30) et pour tenir à disposition l'ensemble de données (D) dans le dispositif de livraison de données (30) pour la transmission à au moins un terminal (40), la transmission de l'ensemble de données ayant lieu après avoir reçu une demande du dispositif de livraison de données, la demande contenant le géocode du dispositif de livraison de données,
- des adresses de dispositifs de livraison de données (30) étant assignées aux géocodes (70) des dispositifs de livraison de données (30),
- au moins une adresse assignée étant déterminée avant la transmission de l'ensemble de données (D) pour des géocodes (70) qui sont dans la relation prédéterminée avec au moins un géocode (65) du bloc de données (D2) de l'ensemble de données (D) et
- l'ensemble de données (D) pouvant être transmis au dispositif de livraison de données qui existe au moins (30) avec l'adresse déterminée qui existe au moins.

15. Dispositif de livraison de données (30) qui peut être relié à un dispositif de serveur (20), le dispositif de livraison de données présentant :
- un dispositif pour déterminer un géocode (70) qui est indicatif du lieu du dispositif de livraison de données,
- des moyens pour transmettre le géocode déterminé (70) et une adresse assignée au dispositif de livraison de données au dispositif de serveur (20), les moyens pour transmettre étant configurés de telle manière qu'ils provoquent une transmission du géocode (70) et de l'adresse lorsque le géocode ou l'adresse change,
- des moyens pour recevoir un ensemble de données (D) transmis par le dispositif de serveur (20),
- un dispositif de stockage pour le stockage permanent de l'ensemble de données transmis (D) dans le dispositif de livraison de données (30) et
- des moyens pour tenir à disposition l'ensemble de données (D) pour la transmission à au moins un terminal (40).
